# EUROPEAN PATENT APPLICATION

(11) **EP 4 831 849 A1**
(43) Date of publication of application: **28.10.2026**
(21) Application number: 26173805.8
(22) Date of filing: 21.04.2026
(51) Int. Cl.: G06F 21/56

(54) **METHODS AND APPARATUS TO OPTIMIZE A MALWARE DETECTION SYSTEM**

(30) Priority: 22.04.2025 US 202519186303
(71) Applicant: McAfee, LLC, San Jose, CA 95002 (US)
(72) Inventor: MYSORE, Vinay, 560024 BENGALURU (IN); LANCIONI, German, SAN JOSE, 95127 (US); PIPRIYA, Sidharth, 560066 BENGALURU (IN); GAUTAM, Shashank, 226012 LUCKNOW (IN)
(74) Representative: Icosa

(57) **Abstract**

Systems, apparatus, articles of manufacture, and methods are disclosed to optimize a malware detection system. An example apparatus includes interface circuitry to obtain an input sample, instructions, and at least one programmable circuit to be programmed by the instructions to select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models, and initiate the at least one selected detection model to classify the input sample as clean or malicious.

## Description

### FIELD OF THE DISCLOSURE

This disclosure relates generally to malware detection systems and, more particularly, to optimizing a malware detection system.

### BACKGROUND

Malware is harmful software (e.g., data, program, file, etc.) designed to damage or steal information from a device. Cybersecurity companies have developed malware detection systems designed to detect various types of malware. Such malware detection systems provide static analysis of data or dynamic analysis of data. A static malware detection system may include one or two types of detection models that detect one or two types of malware in software. A dynamic malware detection system may include a plurality of detection models that detect three or more types of malware in software.

### BRIEF DESCRIPTION OF THE DRAWINGS

FIG. 1 illustrates an example malware detection environment in which an example orchestration circuitry operates to orchestrate (e.g., schedule, handle, initiate) an example threat detection system based on an example sample submission.
FIG. 2 is a block diagram of an example implementation of the orchestration circuitry of FIG. 1.
FIG. 3 is a block diagram of an example implementation of a portion of the orchestration circuitry of FIG. 2 to implement the example default workflow of FIG. 2.
FIG. 4 is an example frequency map table illustrating the frequency of successful classifications per detection microservice of the threat detection system of FIG. 1.
FIG. 5 is a block diagram of an alternative example implementation of the orchestration circuitry of FIG. 1.
FIGS. 6-8 are flowcharts representative of example machine readable instructions and/or example operations that may be executed, instantiated, and/or performed by example programmable circuitry to implement the orchestration circuitry of FIG. 2.
FIG. 9 is a flowchart representative of example machine readable instructions and/or example operations that may be executed, instantiated, and/or performed by example programmable circuitry to implement the orchestration circuitry of FIG. 5.
FIG. 10A is a block diagram of an example processing platform including programmable circuitry structured to execute, instantiate, and/or perform the example machine readable instructions and/or perform the example operations of FIGS. 6-8 to implement the orchestrator circuitry of FIG. 2.
FIG. 10B is a block diagram of an example processing platform including programmable circuitry structured to execute, instantiate, and/or perform the example machine readable instructions and/or perform the example operations of FIG. 9 to implement the orchestrator circuitry of FIG. 5.
FIG. 11 is a block diagram of an example implementation of the programmable circuitry of FIGS. 10A and 10B.
FIG. 12 is a block diagram of another example implementation of the programmable circuitry of FIGS. 10A and 10B.

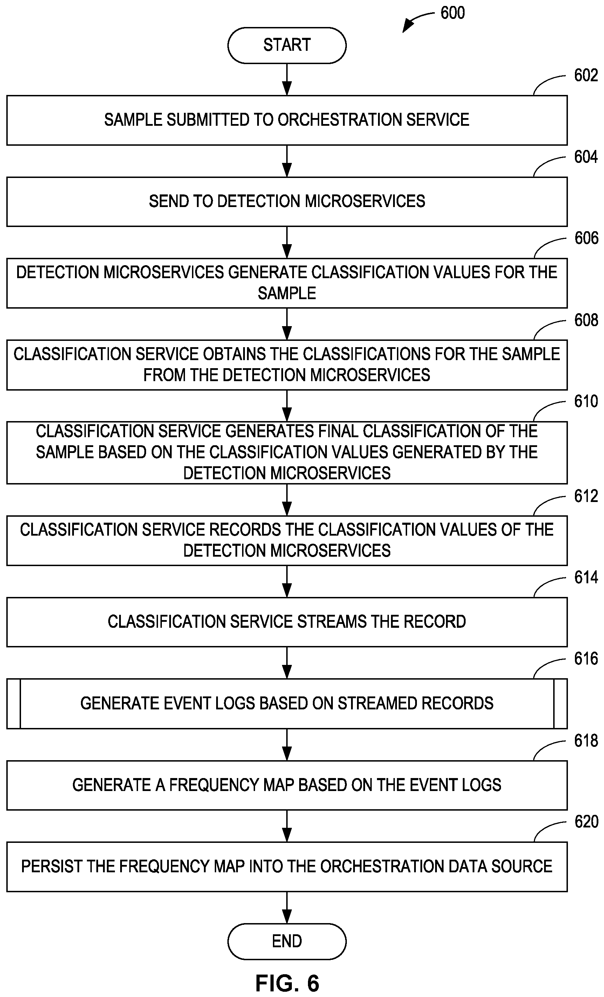

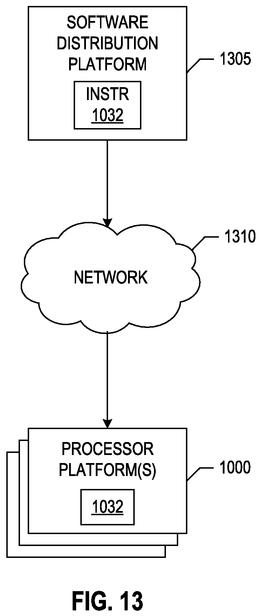

FIG. 13 is a block diagram of an example software/firmware/instructions distribution platform (e.g., one or more servers) to distribute software, instructions, and/or firmware (e.g., corresponding to the example machine readable instructions of FIGS. 6-9) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

File and fileless threat detection includes the detection of malware or other malicious code in software (e.g., emails, files, applications, etc.). File and fileless threat detection is challenging due to the dynamic nature of malware. For example, concept drift is a phenomenon where a machine learning model, or other artificial intelligence-based model (e.g., deep learning model, neural networks, etc.) trained to detect malware becomes less effective over time because the characteristics of new malware samples significantly change from the original training data used to train the machine learning model. The underlying concept of what constitutes malware evolves, leading to a mismatch between the expectations of the model and the new threats the model encounters. This mismatch is generally caused by malware authors (e.g., human or machine-based attackers) actively attempting to evade detection by modifying their techniques in creating malware and/or the characteristics of the malware.

As mentioned above, there are two main approaches in malware detection: static analysis and dynamic analysis. While static malware detection systems are simple (e.g., use only one or two types of models), more advanced dynamic analysis systems may need multiple sub-systems or detection mechanisms to achieve high efficacy when detecting malware. As used herein, "sub-systems", "detection mechanisms", "detection models", "detection microservices", and "models" are used interchangeably and are defined as programmable circuitry implemented algorithms designed to detect and classify malware based on input data and/or a sample of input data (e.g., input software, input file, input data, input email, input application, input media, etc.). In a dynamic analysis system, also referred to herein as a malware detection system, samples are sent through multiple feature extraction stages and several detection mechanisms, such as heuristics, behavior-based models, machine learning models, artificial intelligence models, steganographic detectors, etc. Such a malware detection system feeds samples in a cascading pipeline through several detection mechanisms to achieve a good detection rate for the overall system and so that at least one of the detection mechanisms can detect a malicious sample.

However, such malware detection systems are expensive to run due to the cascading pipeline which includes many detection mechanisms, especially when the detection mechanisms are computationally intensive (e.g., require a high level of compute resources and bandwidth). Additionally, although the many detection mechanisms are used for various types of malware detection, some of the detection mechanisms may be redundant and, thus, a waste of computational resources. For example, in the classification of file samples, it has been observed that 50% of the classified samples can be accurately classified running a subset of the detection mechanisms, rather than all of them.

Examples disclosed herein include malware detection systems that identify a subset (e.g., a minimal subset) of detection mechanisms to be engaged (e.g., initiated, activated, used, etc.) to maintain a high detection rate (e.g., above a threshold). Examples disclosed herein significantly reduce the overall system computational complexity, which translates into tangible cost (e.g., computational cost, monetary cost, consumption cost, etc.) and time-to-detect savings.

Examples disclosed herein optimize the malware detection system by providing orchestration optimization circuitry that identifies a subset of detection mechanisms based on a success number (e.g., a frequency, a rate, percentage, a ratio, etc.) in which all of the detection mechanisms are successfully classifying a sample as either clean or malicious within a time window. As used herein, a successful classification is a classification that corresponds to a high confidence level (e.g., a confidence value above a threshold). For example, if classification values are on a scale from 0-1, where values close to zero correspond to clean files and values close to 1 correspond to malicious files, a successful classification of clean may correspond to output values between 0 and 0.3 and a successful classification of malicious may correspond to output values between 0.7 and 1. As used herein, "frequency" is defined as the number of times that a detection mechanism classifies samples of data (e.g., input software, input file, input data, etc.) within a time window. In some examples, the orchestration optimization circuitry disclosed herein may identify the subset of detection mechanisms based on a frequency map (also referred to as a frequency table, a success map, a success table, etc.). For example, the orchestration optimization circuitry populates a frequency map with the detection mechanisms and corresponding frequency that those detection mechanisms classify samples of data In some examples, the orchestration optimization circuitry disclosed herein may identify the subset of detection mechanisms using a trained machine learning model to select the subset of detection mechanisms based on an input sample type. Examples disclosed herein can train the machine learning model using static features of the samples of data and historical classification data of the malware detection system.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, a malware orchestration model is used. Using a malware orchestration model enables optimization of malware detection systems by predicting, based on the input sample, what detection mechanisms will successfully classify the sample as malicious or clean. In general, machine learning models/architectures that are suitable to use in the example approaches disclosed herein will be supervised machine learning models. However, other types of machine learning models could additionally or alternatively be used such as unsupervised, semi-supervised, etc.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, ML/AI models are trained using supervised learning. However, any other training algorithm may additionally or alternatively be used. In examples disclosed herein, training is performed until the model classifications satisfy an accuracy threshold. In examples disclosed herein, training may be performed remotely, such as at a central facility. Training is performed using hyperparameters that control how the learning is performed (e.g., a learning rate, a number of layers to be used in the machine learning model, etc.).

Training is performed using training data. In examples disclosed herein, the training data originates from locally generated data. Because supervised training is used, the training data is labeled. Labeling is applied to the training data by orchestration circuitry.

After training is complete, the model is deployed for use as an executable construct that processes an input and provides an output based on the network of nodes and connections defined in the model. The model is stored in memory at the orchestration circuitry. The model may then be executed by the orchestration circuitry.

After trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

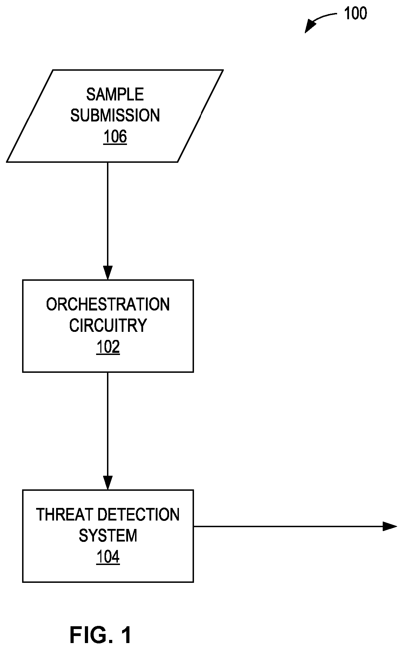

FIG. 1 is an example malware detection environment 100 in which example orchestration circuitry 102 operates to orchestrate (e.g., schedule, handle, initiate) an example threat detection system 104 based on an example sample submission 106.

In FIG. 1, the example orchestration circuitry 102 operates to identify a subset of detection models of the threat detection system 104 to select for detecting malware in a sample submission 106. The orchestration circuitry 102 may operate remotely relative to an entity submitting a sample of input data. For example, the orchestration circuitry 102 may be implemented by one or more servers of a central facility and provide malware detection services to one or more clients. In such examples, the orchestration circuitry 102 may intercept incoming data (e.g., sample submission(s) 106) to the one or more clients and instruct the threat detection system 104 to analyze the data for malware. Additionally and/or alternatively, the orchestration circuitry 102 may be hosted locally at a client device. In such an example, the orchestration circuitry 102 obtain samples of data from the client device before the client device takes action (e.g., downloads, reads, modifies, etc.) with/on the data.

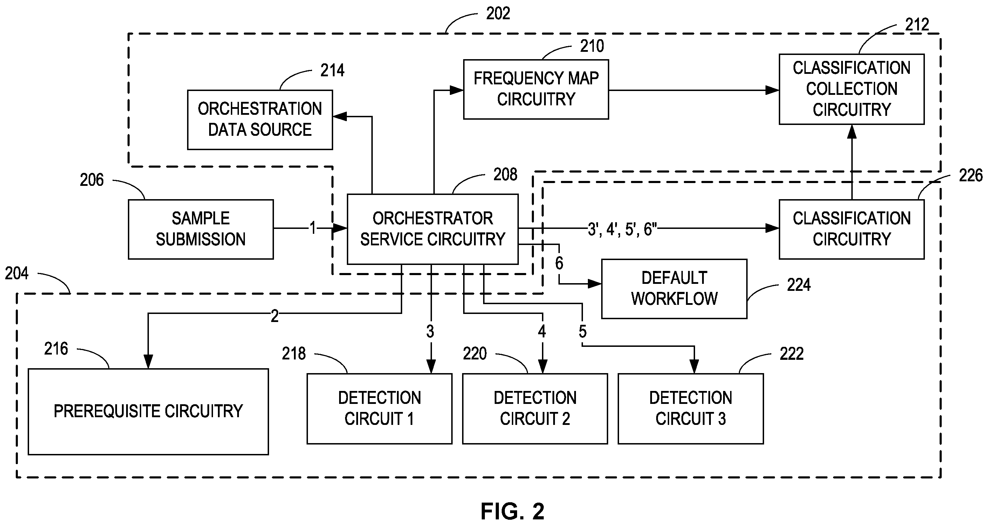

The orchestration circuitry 102 of FIG. 1 analyzes the sample submission 106 to determine the type of sample to be classified based on an output of prerequisite microservices, described in further detail below in connection with FIG. 2. Some sample types fall under a file-based category and others fall under a fileless-based category. A file-based sample is a sample that includes all parts of a file. The orchestration circuitry 102 sends file-based samples to the threat detection system 104 to extract features from the file-based sample. File-based samples include portable executable (PE) files, JavaScript (JS) files, Java files, self-extracting archive (SFX) files, Visual Basic Scripting (VBS) files, Android Package Kit (APK) files, etc. A fileless-based sample is a sample in which not all parts of the file are included, but instead metadata around the file. For example, the orchestration circuitry 102 obtains a fileless-based sample when the client device extracts metadata from the file and sends the metadata as a fileless-based sample to the orchestration circuitry 102 for classification.

The orchestration circuitry 102 of FIG. 1 selects the subset of detection models based on the type of sample being analyzed. For example, some detection models may classify a first sample type, but not a second sample type. The orchestration circuitry 102 selects the subset of detection models based on the detection models that more frequently contribute to classifying the sample type as malicious or clean.

The orchestration circuitry 102 of FIG. 1 activates the selected subset of detection models at the threat detection system 104 and routes the sample to the detection models for classification of the thread detection system 104 via a wired or wireless communication. The orchestration circuitry 102 is described in further detail below in connection with FIG. 2.

In FIG. 1, the threat detection system 104 is a server and/or threat detection circuitry that processes a collection of microservices (e.g., detection models) that operate to dynamically classify the sample submissions 106. For example, the threat detection system 104 is a microservice service architecture that includes a plurality of microservices and/or models implementing different detection algorithms. Each microservice and/or model is responsible for classifying a sample using a different detection mechanism (e.g., algorithm). As used herein, the terms "microservice" and "detection model" are used interchangeably.

In some examples, the threat detection system 104 may be deployed in a cloud environment, such that one microservice can be scaled and managed separately from other microservices and components of the threat detection system 104. Additionally and/or alternatively, the threat detection system 104 may be deployed in any type of computing environment.

In FIG. 1, the sample submission 106 to be classified by the threat detection system 104. While FIG. 1 illustrates a single sample submission 106, hundreds to thousands of samples of data may be submitted to the orchestration circuitry 102 and/or to the threat detection system 104 for malware and/or threat detection. In some examples, the orchestration circuitry 102 and the threat detection system 104 any be implemented in the same device or in different devices. In some examples, portions of the orchestration circuitry 102 may be implemented in the thread detection system 104 and/or portions of the threat detection system 104 may be implemented in the orchestration circuitry 102. For example, the sample submission 106 can be obtained by the thread detection system 104, where the threat detection system 104 determines the sample type, sends the sample type to the orchestration circuitry 102 and the orchestration circuitry 102 determines the subset of detection models based on the determined sample type and outputs an indication of the subset to the thread detection system 104.

FIG. 2 is a block diagram of an example implementation of the orchestration circuitry 102 of FIG. 1 to orchestrate the detection models of the threat detection system 104. FIG 2 includes example orchestration circuitry 202, example threat detection system 204, and example sample submission(s) 206. The example orchestration circuitry 202 corresponds to the orchestration circuitry 102 of FIG. 1, the example threat detection system 204 corresponds to the threat detection system 104 of FIG. 1, and the example sample submission(s) 206 corresponds to the sample submission 106 of FIG. 1. In FIG. 2, the orchestration circuitry 202 includes example orchestrator service circuitry 208, example frequency map circuitry 210, example classification collection circuitry 212, and an example orchestration data source 214. The threat detection system 204 of FIG. 2 includes example prerequisite circuitry 216, example detection circuitry 218-222, an example default workflow 224, and example classification circuitry 226. Although the threat detection system 204 includes three detection circuits, there may be any number of threat detection circuitries. The orchestration circuitry 202 of FIG. 2 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the orchestration circuitry 202 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

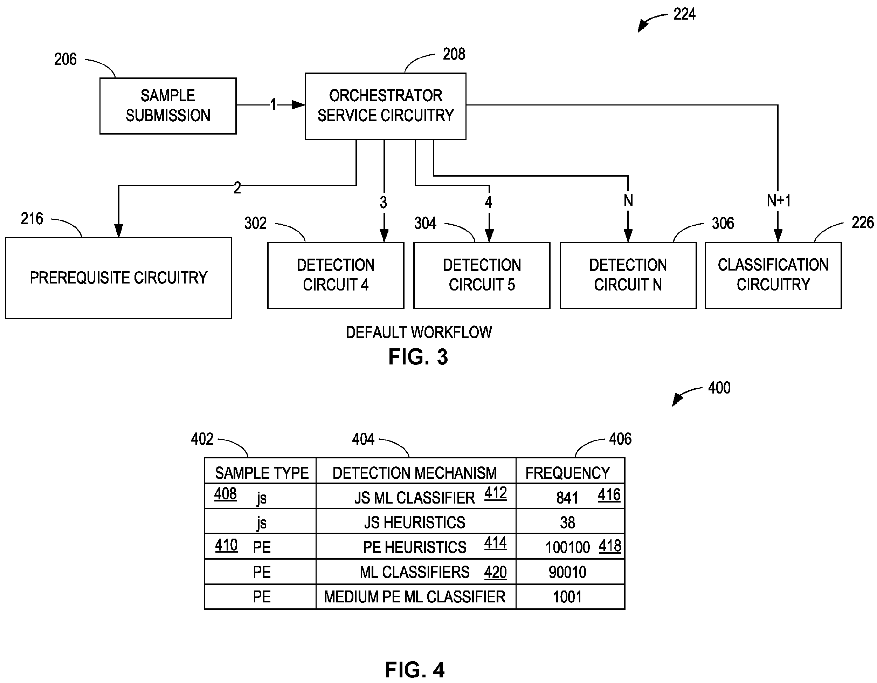

In FIG. 2, the orchestrator service circuitry 208 initiates a subset of the detection circuitry implemented by the threat detection system 204 and determines a workflow for routing a sample submission 206 through the threat detection system 204 for an efficient classification of the sample submission 206. The orchestrator service circuitry 208 initiates the subset of detection circuitry based on a frequency map. The frequency map includes sample types, detection microservice types, and frequency values corresponding to how many times the detection microservice types classified the sample types in a time window, as further described below in conjunction with FIG. 4. The orchestrator service circuitry 208 can initiate the first detection circuit 218, the second detection circuit 220, and the third detection circuit 222 based on an indication in the frequency map that these three detection microservices contribute the most to successful classification of samples, for example. The orchestrator service circuitry 208 obtains the frequency map from the frequency map circuitry 210. The orchestrator service circuitry 208 may change which one or more of the detection circuits 218, 220, 222 to initiate based on updates to the frequency map, described in further detail below.

The orchestrator service circuitry 208 of FIG. 2 determines the workflow of the sample submission 206 based on information in the frequency map and information returned from the classification circuitry 226. For example, the orchestrator service circuitry 208 determines and/or selects one of more of the detection circuits 218, 220, 222 to analyze the sample submission 206 first based on how frequently the individual detection circuits 218, 220, 222 have successfully classified previous sample submissions 206. The orchestrator service circuitry 208 determines the next steps of the workflow based on the classification circuitry 226 determining that one or more of the detection circuits 218, 220, 220 have successfully classified the sample submission 206. For example, if the first detection circuit 218 attempts to classify the sample submission 206, and the classification circuitry 226 determines that the classification was not successful (e.g., the output of the detection circuit 218 was a value, probability, etc., that could not be used to classify the sample submission 206 as malicious or clean), the orchestrator service circuitry 208 routes the data to the next initiated detection circuitry (e.g., second detection circuit 220) that contributes the second most to successful classifications of prior sample submissions, based on the frequency map. This workflow continues until the classification circuitry 226 informs the orchestrator service circuitry 208 that a successful classification (e.g., the output of a detection circuit was a value, probability, etc., that could be used to classify the sample submission 206 as clean or malicious) has been made. In some examples, the orchestrator service circuitry 208 enters a default workflow 224 if none of the selected detection microservices successfully classify the sample submission 206. The default workflow 224 is illustrated in FIG. 3 and described in further detail below in connection with FIG. 3.

In some examples, the orchestrator service circuitry 208 initiates a classification event when a new sample submission 206 is received. In some examples, a classification event includes a classification by one detection circuit (e.g., detection circuits 218, 220, 222). Alternatively, a classification events includes classifications by more than one detection circuit. As described in further detail below, a classification event is collected by the classification collection circuitry 212 and used to generate the frequency map.

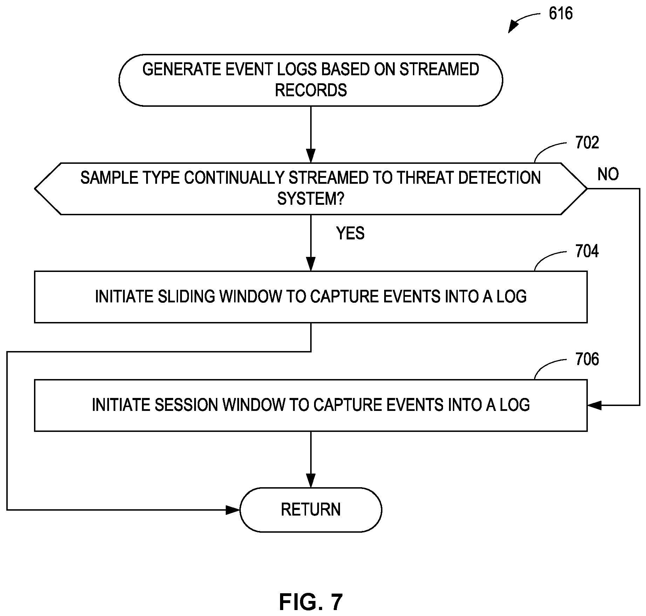

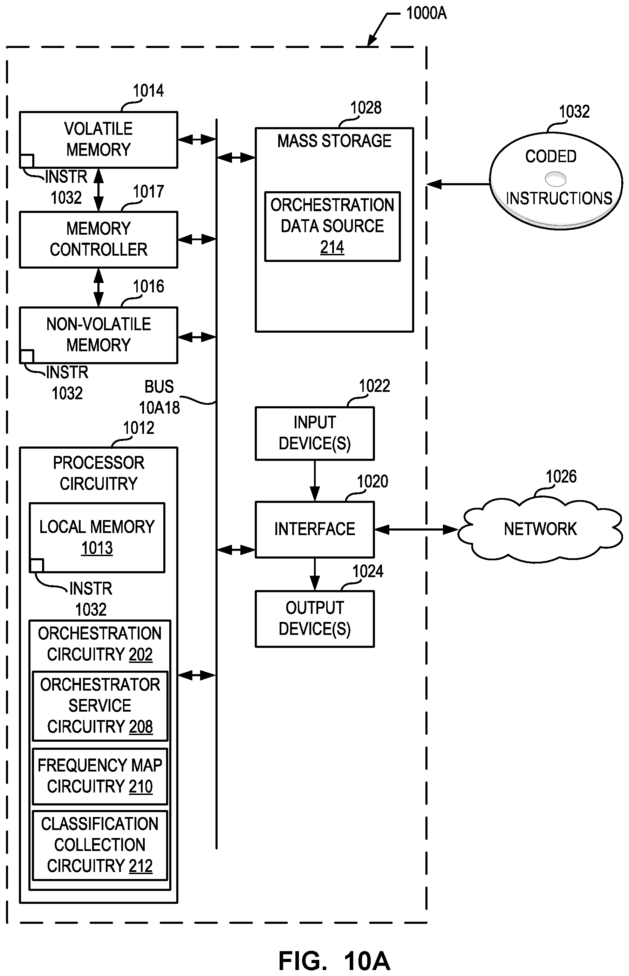

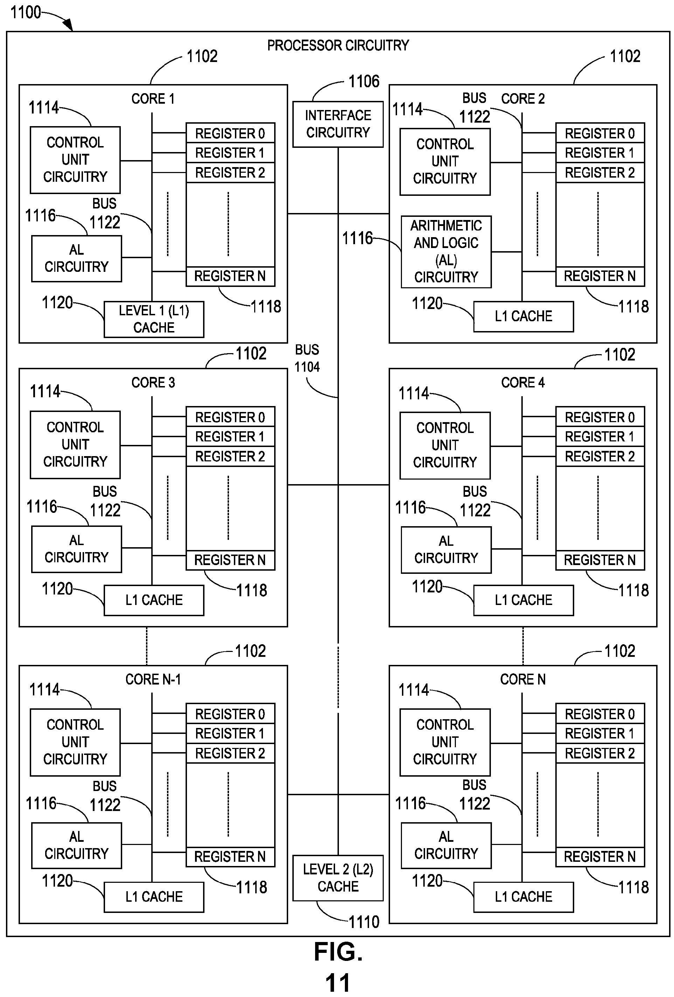

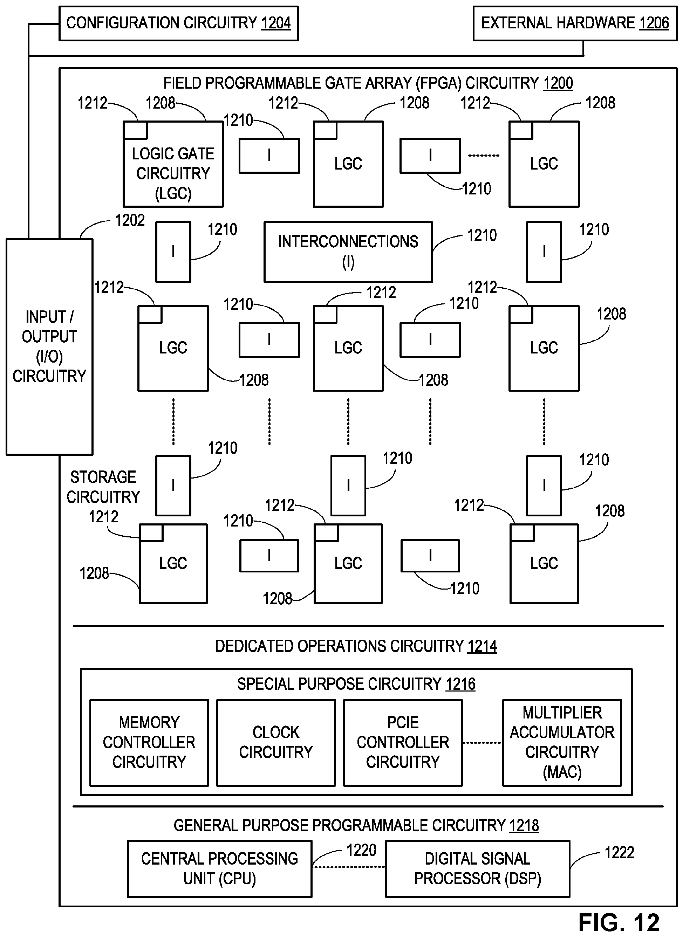

In some examples, the orchestration circuitry 202 includes means for initiating a subset of detection circuitry based on a frequency map. For example, the means for initiating a subset of detection circuitry based on the frequency map may be implemented by orchestrator service circuitry 208. In some examples, the orchestrator service circuitry 208 may be instantiated by programmable circuitry such as the example programmable circuitry 1012 of FIG. 10A. For instance, the orchestrator service circuitry 208 may be instantiated by the example microprocessor 1100 of FIG. 11 executing machine executable instructions such as those implemented by at least blocks 702, 704 of FIG. 7. In some examples, the orchestrator service circuitry 208 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the orchestrator service circuitry 208 may be instantiated by any other combination of hardware, software, and/or firmware. For example, the orchestrator service circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In FIG. 2, the frequency map circuitry 210 generates and continually updates a frequency map that is used to identify the success rate of the detection circuitry 218-222 when classifying the sample submissions 206. For example, the frequency map circuitry 210 counts, within a time window, a number of times that the detection circuit 218 successfully classifies the sample submissions 206 as malicious or clean (e.g., not malicious), a number of times that the detection circuit 220 successfully classifies the sample submissions 206 as malicious or clean, a number of times that the detection circuit 222 successfully classifies the sample submissions 206 as malicious or clean, etc. Additionally or alternatively, the frequency map circuitry 210 generate a success number or value for a detection model using a different statistical measurement for determining the success of the detection circuits 218, 220, 222, such as a success rate/percentage (e.g., corresponding to the number of successful classifications to the total number of classifications or the number of unsuccessful classification), a failure rate/percentage (e.g., corresponding to the number of unsuccessful classifications to the total number of classifications or the number of successful classifications), etc. In some examples, the numbers corresponding to respective successful classifications are indicative of a number of times the detection circuits 218-222 generated output values having high confidence levels (e.g., a strong classification) for input samples. The output values and/or classifications, confidence levels, and successful classifications are described in further detail below in connection with the classification circuitry 226.

The frequency map circuitry 210 updates the frequency map in real time as the detection circuitries 218-222 generate classifications of the sample submissions 206. For example, the frequency map circuitry 210 is in communication with classification collection circuitry 212, which is continuously updated with classification information by the classification circuitry 226. The frequency map circuitry 210 updates the frequency map based on information provided by the classification collection circuitry 212. An example of the frequency map is illustrated in FIG. 4 and described in further detail below in connection with FIG. 4.

In some examples, the frequency map circuitry 210 of FIG. 2 automatically prioritizes new detection mechanisms if the new detection mechanisms are contributing more to classification of sample submissions 206. For example, if the threat detection system 204 is updated to include new detection circuitry not previously implemented, the frequency map circuitry 210 automatically updates the frequency map with the new detection circuitry and the frequency at which the new detection circuitry successfully classifies sample submissions 206.

In some examples, the orchestrator service circuitry 208 of FIG. 2 reads the frequency map from the frequency map circuitry 210 and persists (e.g., stores in memory, writes to memory, etc.) the frequency map into an orchestrator data source 214. The orchestrator service circuitry 208 persists the frequency map into the orchestrator data source 214 to maintain a common up-to-date state of the orchestration circuitry 102.

In some examples, the orchestration circuitry 202 includes means for generating a frequency map. For example, the means for generating a frequency map may be implemented by frequency map circuitry 210. In some examples, the frequency map circuitry 210 may be instantiated by programmable circuitry such as the example programmable circuitry 1012 of FIG. 10A. For instance, the frequency map circuitry 210 may be instantiated by the example microprocessor 1100 of FIG. 11 executing machine executable instructions such as those implemented by at least blocks 702, 704 of FIG. 7. In some examples, the frequency map circuitry 210 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the frequency map circuitry 210 may be instantiated by any other combination of hardware, software, and/or firmware. For example, the frequency map circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In FIG. 2, the classification collection circuitry 212 is a platform that collects, processes, and stores data streamed from the classification circuitry 226 in real time or near real time. The classification collection circuitry 212 collects, processes, and stores ordered sequences of events (e.g., a sample submitted to the orchestration circuitry 202 to be classified) in a log with information about the state of the event (e.g., classification complete, incomplete, etc.) and a description of occurred events (e.g., detection microservices 1 and 3 successfully classified sample submission 206, but detection microservices 2, 4, and 5 failed to classify the sample submission 206). The classification collection circuitry 212 processes the data into the logs based on a record produced by the classification circuitry 226. For example, the classification circuitry 226 records all the detection microservices that contributed to a final, successful classification of the sample submission 206. The classification collection circuitry 212 uses the records from the classification circuitry 226 to log the event and include the information about the state of the event and a description of the occurred events.

In some examples, the classification collection circuitry 212 of FIG. 2 manages and stores the log for a specified period of time or indefinitely. In examples disclosed herein, the classification collection circuitry 212 stores the log for a specified period of time. For example, the classification collection circuitry 212 uses a time windowing protocol. The time windowing protocol includes grouping data into time-based segments to perform aggregations or other stateful operations on data within a specific time frame, preventing endless accumulation of data by providing a snapshot of the data within a defined time window. The classification collection circuitry 212 may implement a sliding time window or a session time window. The sliding window is a window of a fixed size, determined by a maximum time difference between events, that captures classification events and processes them into a log. As the window slides over the data, old records are discarded as new classification events are received. The session window is different from a sliding window because the session window group data by sessions of activity, rather than by a start time and an end time defined by a maximum time difference. The session represents a period of activity separated by a defined gap of inactivity. For example, if the gap of inactivity is defined to be five seconds, and a new session (e.g., classification of a sample) occurs with three events (e.g., three detection microservices attempt to classify the sample) occurring at time 10, time 12, and time 20, the classification collection circuitry 212 creates two sessions: one session starting from time 10 and ending at time 12, and a second session starting and ending at time 20. The length of the session is driven by the timestamps of the data within the session. Thus, session windows may not be fixed-size windows.

In some examples, the classification collection circuitry 212 of FIG. 2 implements the sliding window for sample submissions 206 that have a frequent arrival pattern and/or are continually streamed to the threat detection system 204, such as portable executable (PE) files, JavaScript (JS) files, Java files, self-extracting archive (SFX) files. The classification collection circuitry 212 implements the sliding window for these types of samples to ensure that alternative detection circuits are orchestrated effectively for sample submissions that have a frequent arrival pattern. In some examples, the classification collection circuitry 212 implements the session window for sample submissions 206 that have a more sparse arrival pattern. The classification collection circuitry 212 implements the session window for these types of sample to ensure that alternative detection circuits are orchestrated effectively for sample submissions 206 that have a sparse arrival pattern.

In some examples, the logs of classification events are persistent real-time or near real-time streams. A persistent real-time stream is a continuous flow of data that is captured and stored as it is generated, allowing for access and processing of the data even after it has been produced. By generating and storing logs of classification events as a persistent data stream, the frequency map circuitry 210 is able to analyze the classification data in real-time and update frequency numbers in real-time or near real-time.

In some examples, the orchestration circuitry 202 includes means for obtaining classification events corresponding to input samples and detection models that successfully classified the input samples. For example, the means for obtaining classification events corresponding to input samples and detection models that successfully classified the input samples may be implemented by classification collection circuitry 212. In some examples, the classification collection circuitry 212 may be instantiated by programmable circuitry such as the example programmable circuitry 1012 of FIG. 10A. For instance, the classification collection circuitry 212 may be instantiated by the example microprocessor 1100 of FIG. 11 executing machine executable instructions such as those implemented by at least blocks 702, 704 of FIG. 7. In some examples, the classification collection circuitry 212 may be instantiated by hardware logic circuitry, which may be implemented by an ASIC, XPU, or the FPGA circuitry 1200 of FIG. 12 configured and/or structured to perform operations corresponding to the machine readable instructions. Additionally or alternatively, the classification collection circuitry 212 may be instantiated by any other combination of hardware, software, and/or firmware. For example, the classification collection circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In FIG. 2, the orchestration data source 214 is a database that stores the frequency map. The orchestration data source 214 is implemented by any memory, storage device and/or storage disc for storing data such as, for example, flash memory, magnetic media, optical media, solid state memory, hard drive(s), thumb drive(s), etc. Furthermore, the data stored in the orchestration data source 214 may be in any data format such as, for example, binary data, comma delimited data, tab delimited data, structured query language (SQL) structures, etc. While, in the illustrated example, the orchestration data source 214 is illustrated as a single device, the orchestration data source 214 and/or any other data storage devices described herein may be implemented by any number and/or type(s) of memories.

In FIG. 2, the prerequisite circuitry 216 is a microservice or a collection of microservices that prepare(s) the sample submission 206 for analysis by the detection circuits 218-222. In some examples, the prerequisite circuitry 216 determines the sample type of sample submission 206. The orchestrator service circuitry 208 uses that sample type to activate particular detection circuits (e.g., detection circuits 218-222). In some examples, the prerequisite circuitry 216 obtains a file-based or a fileless sample and extracts relevant data from the sample to be processed by the detection circuits 218-222. In some examples, the prerequisite circuitry 216 unpacks files (e.g., decompress a compressed or "packed" file) and extracts metadata. In some examples, metadata includes the author of the file, the title of the file, the file type, file permissions, access restrictions, version control, and any other type of descriptive information related to the sample that may be useful in classifying the sample as malicious or clean. Accordingly, the prerequisite circuitry 216 can provide the unpacked file and/or extracted metadata to the detection circuits 218-222 and the detection circuits 218-222 can utilize the unpacked file and/or extracted metadata to generate an output classification.

In FIG. 2, the detection circuits 218-222 are hardware implementing malware detection microservices (also referred to as detection models). For example, the first detection circuit 218 can implement a PE heuristics microservice, the second detection circuit 220 can implement a machine learning (ML) classifier, and the third detection circuit 222 can implement a medium PE ML classifier. Alternatively, the first detection circuit 218, second detection circuit 220, and third detection circuit 222 may implement different types of detection microservices, such as a JS heuristic microservice, JS ML classifier, steganographic detector, etc. In some examples, the detection circuits 218-222 are initiated by the orchestrator service circuitry 208 to process (e.g., classify) a sample submission 206. In some examples, the orchestrator service circuitry 208 initiates different detection circuits based on the frequency map.

In FIG. 2, the default workflow 224 is a predefined order of detection microservices that are initiated when none of the selected subset of detection circuits 218-222 successfully classify the sample submission. In some examples, the orchestrator service circuitry 208 triggers the default workflow 224 to cause the sample submission 206 to be sent to all, rather than the subset, of the detection microservices of the threat detection system 204 in an effort to obtain a successful classification.

In FIG. 2, the classifications circuitry 226 is a microservice that confirms a final classification of sample submissions 206. In some examples, the classification circuitry 226 receives the output classifications of the sample submission 206 from the detection circuits 218-222 and determines whether the output classifications are indicative of a strong classification (e.g., a classification with a confidence value above a threshold). The detection circuits 218-222 may output values (also referred to as classification values) corresponding to probabilities (also referred to as confidence values) associated with a likelihood that the sample submission 206 is malicious and/or not malicious. For example, if the detection circuits 218-222 are structured to output a value at or near 0 when the output classification corresponds to non-malicious (e.g., clean) and output a value at or near 1 when the output classification corresponds to malicious, then the closer the output classification value is to 0, the more confident the detection circuit 218 is that the sample submission 206 is non-malicious. In such an example, the closer the output classification value is to 1, the more confident the detection circuit 218 is that the sample submission 206 is malicious. Accordingly, values closer to 0 or 1 may correspond to higher confidence levels and values closer to 0.5 may correspond to lower confidence levels. In some examples, the detection circuit 218 may be structured to output an output classification indication or value and a separate confidence value. In such examples, the detection circuit 218 can output an indication that the media file is clean or malicious and a corresponding confidence value that corresponds to a confidence that the output classification is successful (e.g., 0.9 for a 90% confidence that the classification is successful). The classification circuitry 226 may not confirm a classification of the sample submission 206 when the detection circuit 218 outputs a classification value indicative of a medium percentage that the sample submission 206 is malicious. For example, a probability indicative of a medium percentage may be a value between 0.45 - 0.5, or any other value defined by the classification circuitry 226.

In some examples, the classification circuitry 226 of FIG. 2 collects one or more output classifications of the detection circuits 218-222 for every sample submission 206, if output classifications are available, and records the output classifications with associated probabilities, time stamp, detection type used, and an indication as to whether the corresponding classification was an unsuccessful or successful classification. In some examples, the classification circuitry 226 transmits (e.g., streams, sends, etc.) the records to the classification collection circuitry 212.

In an example operation of the orchestration circuitry 202 of FIG. 2, the orchestrator service circuitry 208 begins the workflow by routing the sample submission 206 to the prerequisite circuitry 216. The prerequisite circuitry 216 extracts and/or unpacks data (e.g., metadata) and sends the extracted and/or unpacked data to the orchestrator service circuitry 208. The orchestrator service circuitry 208 uses the frequency map to select one or more of the first detection circuit 218, the second detection circuit 220, or the third detection circuit 222 to send the data for classification. For example, the orchestrator service circuitry 208 routes the data to the detection circuit with the highest number (e.g., the most frequent) of successful classifications identified in the frequency map. For example, if the orchestrator service circuitry 208 determines that the first detection circuit 218 is associated with the highest number of successful classifications, and the orchestrator service circuitry 208 routes the data to the first detection circuit 218. The first detection circuit 218 processes the data and outputs a classification value (e.g., a probability corresponding to a classification) to the orchestrator service circuitry 208. The orchestrator service circuitry 208 forwards the output classification value of the first detection circuit 218 to the classification circuitry 226. The classification circuitry 226 makes a determination that the output is indicative of a strong probability that the sample submission 206 is clean (e.g., based on the output classification value being near zero) or malicious (e.g., based on the output classification value being near one). If the classification circuitry 226 determines that the output classification is indicative of a strong probability, the classification circuitry 226 generates a final classification of the sample submission 206 based on the output classification. If the classification circuitry 226 determines that the output classification is not indicative of a strong probability, the classification circuitry 226 generates and/or outputs an indication that the first detection circuit 218 produced an unsuccessful classification of the sample submission 206.

The classification circuitry 226 generates a record, which gets streamed to the classification collection circuitry 212. The classification circuitry 226 notifies the orchestrator service circuitry 208 that a final classification of the sample submission 206 is complete. The orchestrator service circuitry 208 may not send the extracted data of the sample submission 206 to either of the second detection circuit 220 or the third detection circuit 222. The frequency map circuitry 210 updates the frequency map with the record from classification circuitry 226, indicating that the first detection circuit 218 has made a successful or likely successful classification. The orchestrator service circuitry 208 receives the updated frequency map from the frequency map circuitry 210 and persists the updated frequency map in the orchestration data source 214.

The orchestration circuitry 202 of FIG. 2 includes example orchestrator service circuitry 208, example frequency map circuitry 210, example classification collection circuitry 212, and an example orchestration data source 214. In some examples, the orchestrator service circuitry 208 is instantiated by programmable circuitry executing orchestrator service instructions and/or configured to perform operations such as those represented by the flowchart(s) of FIGS. 6-8. In some examples, the frequency map circuitry 210 is instantiated by programmable circuitry executing frequency map instructions and/or configured to perform operations such as those represented by the flowchart(s) of FIGS. 6-8. In some examples, the classification collection circuitry 212 is instantiated by programmable circuitry executing classification collection instructions and/or configured to perform operations such as those represented by the flowchart(s) of FIGS. 6-8. In some examples, the orchestration data source 214 is instantiated by programmable circuitry executing orchestration data source instructions and/or configured to perform operations such as those represented by the flowchart(s) of FIGS. 6-8.

FIG. 3 is a block diagram of an example implementation of a portion of the orchestration circuitry 202 and the threat detection system 204 of FIG. 2 to implement the example default workflow 224 of FIG. 2. FIG. 3 includes the sample submission 206, orchestrator service circuitry 208, prerequisite circuitry 216, classification circuitry 226, an example fourth detection circuit 302, an example fifth detection circuit 304, and an example Nth detection circuit 306.

In FIG. 3, the fourth detection circuit 302, fifth detection circuit 304, and Nth detection circuit 306 are microservices implementing malware detection algorithms different than the malware detection implemented by the first, second, and third detection circuits 218-222 of FIG. 2. In some examples, the Nth detection circuit 306 represents a last detection microservice of the threat detection system 104. For example, the threat detection system 104 may have N detection circuits, where the orchestration circuitry 102 selects a subset of the N detection circuits to classify the sample submission 206. However, in the default workflow 224, the orchestration circuitry 102 and/or the orchestrator service circuitry 208 selects all of the N detection circuits to classify the sample submission 206. For example, if the selected subset of detection circuits (e.g., detection circuits 218-222) do not successfully classify the sample submission 206 (e.g., generate values closer to 0.5 that correspond to lower confidence levels relative to values closer to 0 or 1 that correspond to higher confidence levels), the orchestrator service circuitry 208 initiates the default workflow 224 and sends the sample submission 206 to all detection circuits (e.g., detection circuits 302-306) for classification of clean or malicious. Accordingly, the orchestrator service circuitry 208 can analyze the output classifications of all the detection circuits 302-306 to generate a final result for the sample submission 206 (e.g., to inform a client or user that the sample submission 206 is clean or malicious).

FIG. 4 is an example frequency map table 400 (also referred to as a successful map table) illustrating the frequency of successful classifications per detection microservice that the orchestrator service circuitry 208 can use to select a particular detection circuit for generating an output classification of a sample. The frequency map table 400 includes an example sample type column 402, an example detection mechanism column 404, and an example frequency column 406.

In FIG. 4, the sample type column 402 represents the type of sample submission that was classified. For example, item 408 illustrates that the sample submission being classified was a JavaScript (js) file, while item 410 illustrates that the sample submission being classified was a portable executable (PE) file.

In FIG. 4, the detection mechanism column 404 represents the type of detection microservice used to classify the sample type. For example, item 412 illustrates that a JavaScript Machine Learning Classifier (JS ML Classifier) classified item 408, and item 414 illustrates that a PE heuristics microservice classified item 410.

In FIG. 4, the frequency column 406 represents the number of successful classifications that the corresponding detection microservice performed on the corresponding sample type. For example, item 416 illustrates that the JS ML classifier (item 412) successfully classified the JavaScript file (item 408) 841 times, while item 418 illustrates that the PE heuristics microservice (item 414) successfully classified the PE file (item 410) 100100 times. In some examples, the frequency column 406 may be replaced with a different successful number or value (e.g., rate, percentage, etc.), as further described above.

In some examples, the frequency map table 400 of FIG. 4 provides an indication of a detection microservices to use the subset based on the frequency values of the frequency column 406. For example, the frequency map table 400 may tag detection mechanism(s) for a particular sample type, when the detection mechanism(s) have a frequency above a threshold. In the example of FIG. 4, the PE heuristics microservice (item 414) and the machine learning (ML) classifier (item 420) may be tagged as the subset of detection microservices to process the sample submission 206, when the sample submission 206 is a portable executable file. Thus, the orchestrator service circuitry 208 can select the PE heuristics microservice (item 414) and the machine learning (ML) classifier (item 420) for portable executable file-based samples based on the tags in the frequency map table 400.

While the frequency map table 400 of FIG. 4 illustrates two sample types and five detection mechanisms, the frequency map table 400 is not limited to including the two sample types and five detection mechanisms. For example, the frequency map table 400 may include any number of sample types and any number of detection mechanisms.

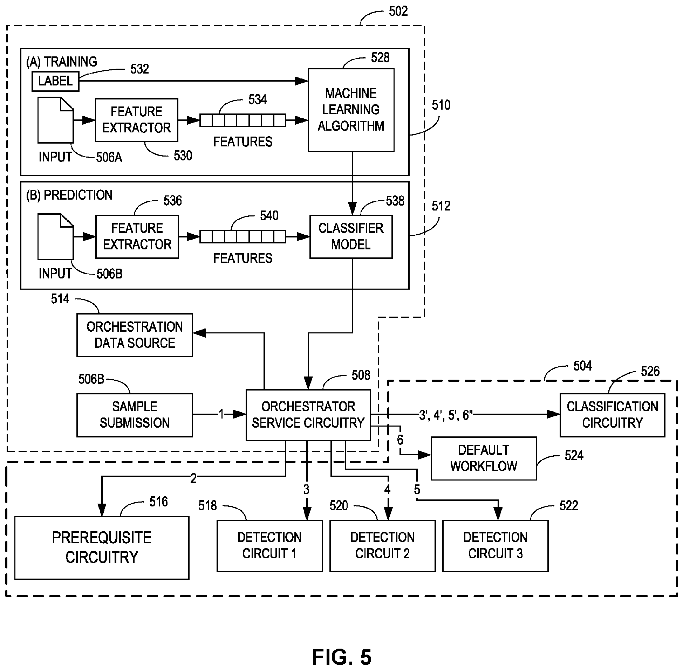

FIG. 5 is a block diagram of an example second implementation of the orchestration circuitry 102 of FIG. 1 to orchestrate the detection circuits of the threat detection system 104. In FIG 5, the second implementation includes example orchestration circuitry 502, an example threat detection system 504, and example sample submission(s) 506a, 506b. The orchestration circuitry 502 of FIG. 5 may be instantiated (e.g., creating an instance of, bring into being for any length of time, materialize, implement, etc.) by programmable circuitry such as a Central Processor Unit (CPU) executing first instructions. Additionally or alternatively, the orchestration circuitry 502 of FIG. 5 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 5 may, thus, be instantiated at the same or different times. Some or all of the circuitry of FIG. 5 may be instantiated, for example, in one or more threads executing concurrently on hardware and/or in series on hardware. Moreover, in some examples, some or all of the circuitry of FIG. 5 may be implemented by microprocessor circuitry executing instructions and/or FPGA circuitry performing operations to implement one or more virtual machines and/or containers.

In FIG. 5, the threat detection system 504 includes example prerequisite circuitry 516, example detection circuitry 518-522, an example default workflow 524, and example classification circuitry 526.

In FIG. 5, the orchestrator service circuitry 508 operates in substantially the same manner as the orchestrator service circuitry 208 of FIG. 2, except that the orchestrator service circuitry 508 of FIG. 5 initiates the subset of the detection circuits based on an inference from the inference circuitry 512 rather than based on a frequency map. For example, in FIG. 5, the orchestrator service circuitry 508 initiates a first detection circuit 518, a second detection circuit 520, and a third detection circuit 522 based on an inference that the detection circuits 518-522 are likely to contribute the most to successful classification of samples. The orchestrator service circuitry 508 obtains the inference from the inference circuitry 512. The orchestrator service circuitry 508 may change what detection circuits are initiated based on updates from the inference circuitry 512 and/or based on types of samples being submitted to the orchestrator circuitry 502.

In FIG. 5, the training circuitry 510 trains an example machine learning algorithm 528 to identify at least one or more detection microservices that can be used to classified a sample 506A. The training circuitry 510 includes the ML algorithm 528 and an example feature extractor 530. As described above, the training circuitry 510 implements supervised training, where the machine learning algorithm 528 is trained using label(s) 532. For example, each input sample 506A has a known output value corresponding to a known classification, given by the label 532, allowing the machine learning algorithm 528 to learn the relationship between input features of the sample input 506A and the desired output classification (e.g., the label 532). The supervised training enables the machine learning (ML) algorithm 528 to predict outcomes on new, unseen data (e.g., sample input 506B) based on the patterns identified during training. As used herein, a "sample input", "sample submission", and "sample" are used interchangeably.

In FIG. 5, the ML algorithm 528 may be any type of AI-based algorithm capable of learning from labeled data. For example, the ML algorithm 528 may be a Linear Regression algorithm, a Logistic Regression, Decision Trees, a Support Vector Machine (SVM), a deep learning algorithm, a Naive Bayes, a Random Forest, a K-Nearest Neighbors (KNN), a Neural Network, etc. Additionally and/or alternatively, the ML algorithm 528 may be any type of ML algorithm.

In FIG. 5, the feature extractor 530 extracts features 534 of the input sample 506A to be analyzed by the ML algorithm 528. The features extracted include raw data from the input sample 506A, such as static attributes from files and metadata of files. In some examples, the static attributes includes a geometry of the sample 506A, a size (in bytes) of the sample 506A, digital signatures in the sample 506A, fingerprints in the sample 506A, etc. In some examples, the ML algorithm 528 determines patterns of the sample 506A and correlates the patterns to the label 532. The label 532 is data indicative of a historical classification of the input sample 506A. For example, the label 532 indicates that the input sample 506A was previously classified using a particular detection microservice and whether that classification was successful or not. The feature extractor 530 provides the extracted features 534 to the ML algorithm 528 for generation of a classification output.

In some examples, the training circuitry 510 of FIG. 5 continues training the ML algorithm 528 until the ML algorithm 528 satisfies an accuracy threshold. For example, the training circuitry 510 uses a portion of the training data to train the ML algorithm 528 and another portion of the training data to test the accuracy of the partially trained ML algorithm 528. The training circuitry 510 can continue to improve the ML algorithm 528 until the ML algorithm 528 outputs a number of inferences for a number of input samples 506A matching the labels 532. In some examples, the accuracy threshold is predetermined threshold indicating that the ML algorithm 528 has learned how to determine which detection microservices will successfully classify a given sample type.

In FIG. 5, the inference circuitry 512 predicts at least one or more detection microservices that can be used to classified a sample input 506B. The inference circuitry 512 includes an example feature extractor 536 and an example classifier model 538.

In FIG 5, the feature extractor 536 extracts relevant, static features 540 of an input sample 506B. For example, the feature extractor 536 extracts the geometry of the sample 506B, a size (in bytes) of the sample 506B, digital signatures in the sample 506B, fingerprints in the sample 506B, the type of sample 506B, etc. The feature extractor 536 sends the features 540 to the classifier model 538.

In FIG. 5, the classifier model 538 implements the trained ML algorithm 528 and generates predictions for sample input(s) 506B based on the features 540. In some examples, the sample input(s) 506B are new and/or unseen samples relative to the known input samples 506A. The classifier model 538 analyzes the features 540 to identify similar patterns as features 534 used during the training phase, and generates an inference that one or more particular detection microservices will successfully classify the sample 506B. In some examples, the classifier model 538 outputs the inference to the orchestrator service circuitry 508.

In FIG. 5, the orchestrator service circuitry 508 determines the workflow of the sample input 506B based on the inference from the classifier model 538 and information returned from the classification circuitry 526. For example, the orchestrator service circuitry 508 determines what detection circuits should analyze the sample 506B first based on the detection circuit corresponding to the highest probability of a successful classification in the inference. The orchestrator service circuitry 508 determines the next steps of the workflow based on whether the classification circuitry 526 determined the detection circuit successfully classified the sample 506B. For example, if the first detection circuit 518 attempts to classify the sample 506B, and the classification circuitry 526 determines that the classification was not successful, the orchestrator service circuitry 508 routes the data to the next initiated detection circuitry (e.g., second detection circuit 520) that has the second highest probability of a successful classification, based on the inference. This workflow continues until the classification circuitry 526 informs the orchestrator service circuitry 508 that a successful classification has been made. In some examples, the orchestrator service circuitry 508 enters a default workflow 524 if none of the selected detection microservices successfully classify the sample 506B. The default workflow 524 is substantially the same as the default workflow 224 illustrated in FIGS. 2 and 3.

In FIG. 5, the orchestration data source 514 may be implemented by the second implementation of the orchestration circuitry 502 to store inferences. In some examples, the orchestration circuitry 502 does not implement the orchestration data source 514.

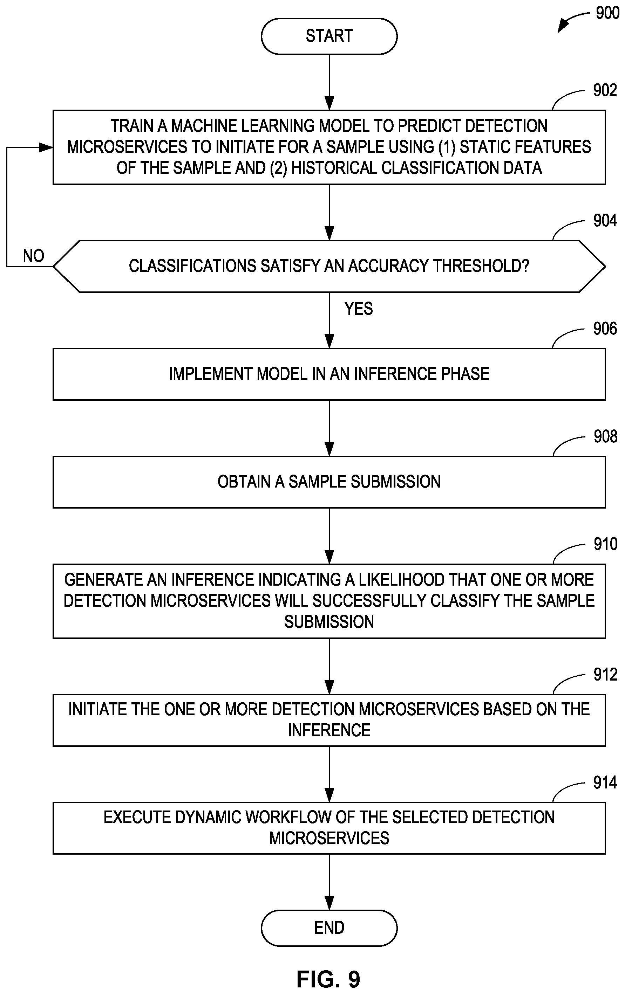

The orchestration circuitry 502 of FIG. 5 includes example orchestrator service circuitry 508, example training circuitry 510, example inference circuitry 512, and an example orchestration data source 514. In some examples, the orchestrator service circuitry 508 is instantiated by programmable circuitry executing orchestrator service instructions and/or configured to perform operations such as those represented by the flowchart of FIG. 9. In some examples, the training circuitry 510 is instantiated by programmable circuitry executing training instructions and/or configured to perform operations such as those represented by the flowchart of FIG. 9. In some examples, the inference circuitry 512 is instantiated by programmable circuitry executing inference instructions and/or configured to perform operations such as those represented by the flowchart of FIG. 9. In some examples, the orchestration data source 514 is instantiated by programmable circuitry executing orchestration data source instructions and/or configured to perform operations such as those represented by the flowchart of FIG. 9.

While an example manner of implementing the orchestration circuitry 102 of FIG. 1 is illustrated in FIGS. 2 and 5, one or more of the elements, processes, and/or devices illustrated in FIGS. 2 and 5 may be combined, divided, re-arranged, omitted, eliminated, and/or implemented in any other way. Further, the example orchestrator service circuitry 208, example frequency map circuitry 210, example classification collection circuitry 212, example orchestration data source 214, and/or, more generally, the example orchestration circuitry 202 of FIG. 2, and the example orchestrator service circuitry 508, example training circuitry 510, example inference circuitry 512, example orchestration data source 514, and/or, more generally, the example orchestration circuitry 502 of FIG. 5 may be implemented by hardware alone or by hardware in combination with software and/or firmware. Thus, for example, any of the example orchestrator service circuitry 208, example frequency map circuitry 210, example classification collection circuitry 212, example orchestration data source 214, and/or, more generally, the example orchestration circuitry 202 of FIG. 2, and the example orchestrator service circuitry 508, example training circuitry 510, example inference circuitry 512, example orchestration data source 514, and/or, more generally, the example orchestration circuitry 502 of FIG. 5, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine readable instructions (e.g., firmware or software). Further still, the example orchestration circuitry 202 of FIG. 2 and the example orchestration circuitry 502 of FIG. 5 may include one or more elements, processes, and/or devices in addition to, or instead of, those illustrated in FIGS. 2 and 5, and/or may include more than one of any or all of the illustrated elements, processes and devices.

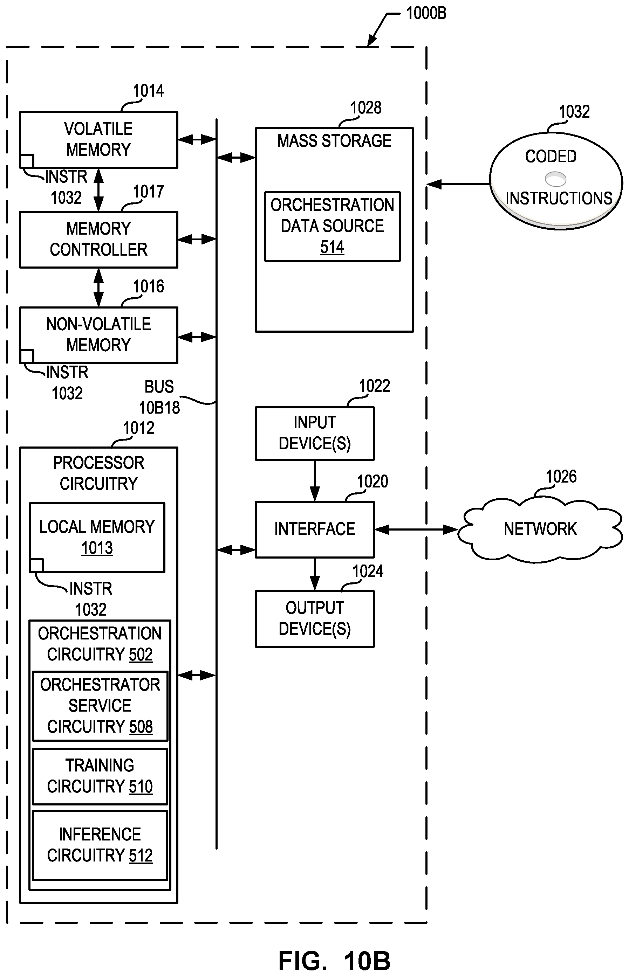

Flowchart(s) representative of example machine readable instructions, which may be executed by programmable circuitry to implement and/or instantiate the orchestration circuitry 202 of FIG. 2 and the example orchestration circuitry 502 of FIG. 5 and/or representative of example operations which may be performed by programmable circuitry to implement and/or instantiate the orchestration circuitry 202 of FIG. 2 and the example orchestration circuitry 502 of FIG. 5, are shown in FIGS. 6-9. The machine readable instructions may be one or more executable programs or portion(s) of one or more executable programs for execution by programmable circuitry such as the programmable circuitry 1012 shown in the example processor platforms 1000A and 1000B, collectively processor platform 1000, discussed below in connection with FIGS. 10A and 10B, collectively FIG. 10, and/or may be one or more function(s) or portion(s) of functions to be performed by the example programmable circuitry (e.g., an FPGA) discussed below in connection with FIGS. 11 and/or 12. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 6-9, many other methods of implementing the example orchestration circuitry 202 of FIG. 2 and the example orchestration circuitry 502 of FIG. 5 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C-Sharp, Perl, Python, JavaScript, HyperText Markup Language (HTML), Structured Query Language (SQL), Swift, etc.

As mentioned above, the example operations of FIGS. 6-9 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 6 is a flowchart representative of example machine readable instructions and/or example operations 600 that may be executed, instantiated, and/or performed by programmable circuitry to generate a frequency map. The example machine-readable instructions and/or the example operations 600 of FIG. 6 begin at block 602, at which a sample (e.g., sample 206 of FIG. 2) is submitted to the orchestrator service circuitry 208 (FIG. 2). For example, the orchestrator service circuitry 208 obtains a file-based or fileless sample from a client device.

At block 604, the orchestrator service circuitry 208 sends the sample to the detection microservices. For example, the orchestrator service circuitry 208 routes the sample 206 to the prerequisite circuitry 216 to unpack and extract features of the sample 206. Then the orchestrator service circuitry 208 routes the features of the sample 206 to the detection circuits of the threat detection system 104.

At block 606, the detection microservices generate classification values for the sample. For example, the detection circuits 218-222 (FIG. 2) generate a prediction, probability, etc., that the sample 206 is malicious or clean.

At block 608, the classification circuitry 226 (FIG. 2) obtains the classifications of the sample from the detection microservices. For example, the orchestrator service circuitry 208 routes the classifications (e.g., predictions) to the classification circuitry 226 to analyze whether the detection circuits made a successful classification.

At block 610, the classification circuitry 226 generates a final classification of the sample based on the classification values generated by the detection microservices. For example, the classification circuitry 226 selects a final classification of malicious or clean for the sample 206 based on the results output by the detection circuits.

At block 612, the classification circuitry 226 records the classification values of the detection microservices. For example, the classification circuitry 226 collects one or more outputs of the detection circuits 218-222 for every sample submission 206, if outputs are available, and records the outputs with associated probabilities, time stamp, detection type used, and unsuccessful or successful classification.

At block 614, the classification circuitry 226 streams the record to the classification collection circuitry 212 (FIG. 2). For example, the classification circuitry 226 transmits (e.g., streams, sends, etc.) the record, having information about the outputs of the detection circuits, to the classification collection circuitry 212.

At block 616, the classification collection circuitry 212 generates event logs based on streamed records. For example, the classification collection circuitry 212 collects, processes, and stores ordered sequences of events (e.g., a sample submitted to the orchestration circuitry 202 to be classified) in a log with some information about the state of the event (e.g., classification complete, incomplete, etc.) and a description of what happened (e.g., detection microservices 1 and 3 successfully classified sample submission 206, but detection microservices 2, 4, and 5 failed to classify the sample submission 206).

Turning briefly to FIG. 7, a flowchart representative of example machine readable instructions and/or example operations 616 that may be executed, instantiated, and/or performed by programmable circuitry to generate event logs based on streamed records is shown. The example machine-readable instructions and/or the example operations 616 of FIG. 7 begin at block 702, at which the classification collection circuitry 212 determines whether the sample is a type continually streamed to the threat detection system 204 (FIG. 2). For example, the classification collection circuitry 212 determines, based on the record, the type of sample 206 (e.g., PE file, JS file, Java file, SFX file, fileless samples, etc.), and identifies whether that type of sample 206 is frequently streamed to the threat detection system 204.

If the classification collection circuitry 212 determines that the sample is a type continually streamed to the threat detection system 204 (e.g., block 702 returns a value YES), the classification collection circuitry 212 initiates a sliding window to capture the events of the record into a log (block 704). For example, the classification collection circuitry 212 causes a sliding window of a fixed size (e.g., 10 seconds, 30 seconds, 60 seconds, etc.) to slide over data in the record and capture data within the time window. As new classification events come into the front, the sliding window drops old records off the back.

If the classification collection circuitry 212 determines that the sample is a type not continually streamed to the threat detection system 204 (e.g., block 702 returns a value NO), the classification collection circuitry 212 initiates a session window to capture the events of the record into a log (block 706). For example, if the sample type has a more sparse arrival time, the classification collection circuitry 212 causes a session window to group data from the record by sessions of activity, rather than by a start time and an end time. The session window represents a period of activity (e.g., times at which detection circuits classified samples) separated by a defined gap of inactivity (e.g., times at which detection circuits were not classifying samples).

The operations of block 616 end when the classification collection circuitry 212 initiates a time windowing concept to capture the streamed records from the classification circuitry 226. The operations of block 616 may be repeated when the classification collection circuitry 212 obtains new records from the classification circuitry 226.

Returning to FIG. 6, at block 618, the frequency map circuitry 210 (FIG. 2) generates a frequency map based on the event logs. For example, the frequency map circuitry 210 uses the event logs to count a number of times that detection circuit 218 (FIG. 2) successfully classifies sample submissions 206 as malicious or clean, a number of times that detection circuit 220 (FIG. 2) successfully classifies sample submissions 206 as malicious or clean, a number of times that detection circuit 222 (FIG. 2) successfully classifies sample submissions 206 as malicious or clean, etc.

At block 620, the orchestrator service circuitry 208 persists the frequency map into the orchestration data source 214. For example, the orchestrator service circuitry 208 persists the frequency map into the orchestrator data source 214 to maintain the state of the frequency map within the orchestration circuitry 102 (FIG. 1).

The operations 600 of FIG. 6 end when the frequency map has been generated and persisted into a database (e.g., the orchestration data source 214).

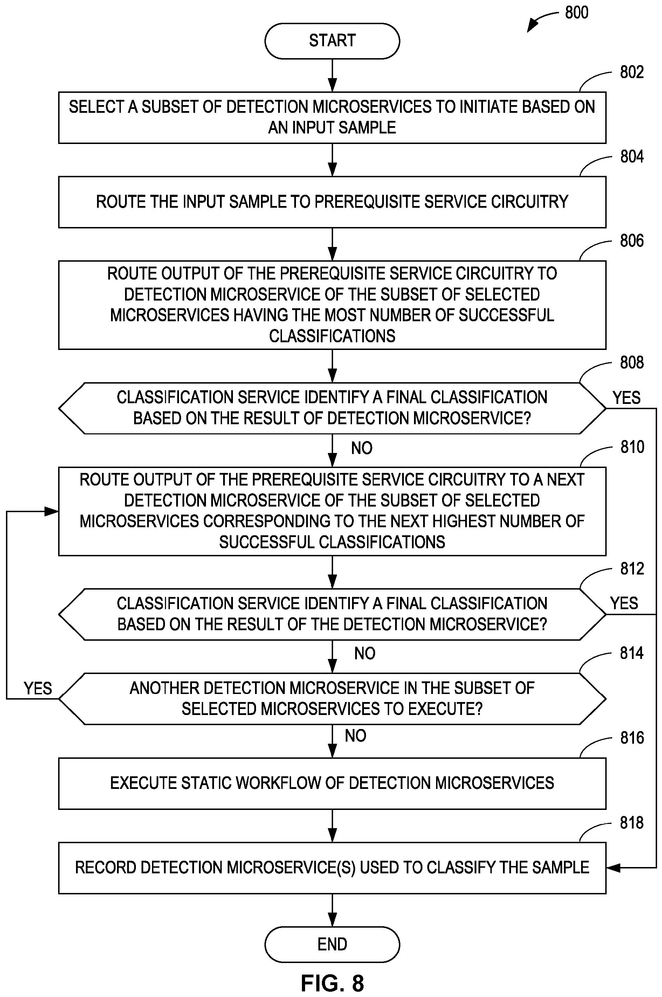

FIG. 8 is a flowchart representative of example machine readable instructions and/or example operations 800 that may be executed, instantiated, and/or performed by programmable circuitry to implement the first implementation of the orchestration circuitry 102 of FIG. 1 to identify a subset of detection circuits to select for detecting malware in a sample. The example machine-readable instructions and/or the example operations 800 of FIG. 8 begin at block 802, at which the orchestrator service circuitry 208 (FIG. 2) selects a subset of detection microservices to initiate based on an input sample (e.g., sample 206 of FIG. 2). For example, the orchestrator service circuitry 208 selects detection circuits 218-222 (FIG. 2) based on the type of sample being analyzed and based on a frequency map illustrating the detection circuits 218-222 correspond to a high frequency of successful classification of the sample type as malicious or clean.

At block 804, the orchestrator service circuitry 208 routes the input sample 206 to prerequisite circuitry 216 (FIG. 2) of the threat detection system 204. For example, the orchestrator service circuitry 208 routes the input sample 206 to the prerequisite circuitry 216 to transform the sample 206 into data that is executable by the detection circuits 218-222. The prerequisite circuitry 216 unpacks files (e.g., decompress a compressed or "packed" file) and extracts metadata from the sample 206 to be processed by the detection circuits 218-222.

At block 806, the orchestrator service circuitry 208 routes the output of the prerequisite circuitry 216 to a detection microservice of the subset of selected microservices having the most number of successful classifications. For example, the orchestrator service circuitry 208 sends the metadata of the sample 206 to the first detection circuit 218 for processing and classification. In this example, the first detection circuit 218 was determined to successfully classify the sample type a first number of times, the first number of times greater than second and third number of times corresponding to respective second and third detection circuits 220, 222.

At block 808, the orchestrator service circuitry 208 determines whether the classification circuitry 226 (FIG. 2) identifies a final classification based on the result of detection microservice. For example, the classification circuitry 226 sends a confirmation to the orchestrator service circuitry 208 indicating whether the first detection circuit 218 successfully classified the sample 206. The classification circuitry 226 determines whether the first detection circuit 218 successfully classified the sample 206 based on the confidence of the output of the first detection circuit 218. For example, as described above, the first detection circuit 218 outputs a value corresponding to clean or malicious. The closer the value is to 1, the higher the confidence that the sample is malicious, for example. Accordingly, the classification circuitry 226 can determine whether the first detection circuit 218 successfully classified the sample 206 when the output of the detection circuit 218 satisfies a threshold (e.g., e.g., is about 0.7, for example). The threshold could be based on user and/or manufacturer preferences.

If the orchestrator service circuitry 208 determines that the classification circuitry 226 did not identify a final classification based on the result of detection microservice (e.g., block 808 returns a value NO), the orchestrator service circuitry 208 routes the output of the prerequisite circuitry 216 to a second detection microservice of the subset of selected microservices corresponding to the next highest number of successful classifications (block 810). For example, the orchestrator service circuitry 208 routes the metadata of the sample 206 to the second detection circuit 220 for processing and classification. In this example, the second detection circuit 220 was determined to successfully classify the sample type a second number of times, the second number of times greater than a third number of times corresponding to the third detection circuit 222.

At block 812, the orchestrator service circuitry 208 determines whether the classification circuitry 226 identified a final classification based on the result of the detection microservice. For example, the classification circuitry 226 sends a confirmation to the orchestrator service circuitry 208 indicating whether the second detection circuit 220 successfully classified the sample 206.

If the orchestrator service circuitry 208 determines that the classification circuitry 226 did not identify a final classification based on the result of the detection microservice (e.g., block 812 returns a value NO), the orchestrator service circuitry 208 determines whether there is another detection microservice in the subset of the selected microservices to execute (block 814). For example, the orchestrator service circuitry 208 determines whether, based on the frequency map, another detection circuit has been initiated.

If the orchestrator service circuitry 208 determines that there is another detection microservice in the subset (e.g., block 814 returns a value YES), control returns to block 810 where the orchestrator service circuitry 208 routes the output of the prerequisite circuitry 216 to a next detection microservice of the subset of selected microservices corresponding to the next highest number of successful classifications.

If the orchestrator service circuitry 208 determines that there is not another detection microservice in the subset (e.g., block 814 returns a value NO), the orchestrator service circuitry 208 executes a static workflow of the detection microservices (block 816). For example, the orchestrator service circuitry 208 enters a default workflow 224 (FIGS. 2 and 3), where the metadata of the sample 206 is routed to every detection circuit in the threat detection system 204.

At block 818, the frequency map circuitry 210 records the detection microservice(s) used to the sample 206. For example, the classification circuitry 226 generates the record having information indicative of results of the classification events, the classification collection circuitry 212 collects and processes the record into logs, and the frequency map circuitry 210 populates the frequency map with the information from the log.

In some examples, if the orchestrator service circuitry 208 determines that the classification circuitry 226 did identify a final classification of the sample based on the result of the detection microservice (e.g., block 808 returns a value YES), control turns to block 818.

In some examples, if the orchestrator service circuitry 208 determines that the classification circuitry 226 identifies a final classification based on the result of the detection microservice (e.g., block 812 returns a value YES), control turns to block 818.

The operations 800 end when the frequency map circuitry 210 populates the frequency map with the classification event(s). In some examples, the operations 800 are repeated when a new input sample corresponding to a different sample type is sent to the threat detection system 204.

FIG. 9 is a flowchart representative of example machine readable instructions and/or example operations 900 that may be executed, instantiated, and/or performed by programmable circuitry to implement the second implementation of the orchestration circuitry 102 of FIG. 1 to identify a subset of detection circuits to select for detecting malware in a sample. The example machine-readable instructions and/or the example operations 900 of FIG. 9 begin at block 902, at which the training circuitry 510 (FIG. 5) trains a machine learning model to predict detection microservices to initiate for a sample using (1) static features of the sample and (2) historical classification data. For example, the training circuitry 510 extracts static features 534 (FIG. 5) of an input sample 506A (FIG. 5), including a geometry of the sample 506A, a size (in bytes) of the sample 506A, digital signatures in the sample 506A, fingerprints in the sample 506A, etc., and causes the ML algorithm 528 (FIG. 5) to associate with features 534 with a label 532 (FIG. 5) corresponding to detection microservices previously used to successfully classify the sample 506A.

At block 904, the training circuitry 510 determines whether the classifications satisfy an accuracy threshold. For example, the training circuitry 510 monitors the progress of the ML algorithm 528 and determines, based on a predetermined threshold, when the ML algorithm 528 is accurately predicting detection microservices that will successfully classify a corresponding input sample 506A.

If the training circuitry 510 determines that the classifications are not satisfying an accuracy threshold (e.g., block 904 returns a value NO), control returns to block 902 where the training circuitry 510 continues to train the ML model to predict detection microservices.

If the training circuitry 510 determines that the classifications satisfy an accuracy threshold (e.g., block 904 returns a value YES), the inference circuitry 512 (FIG. 5) implements the model in an inference phase. For example, the inference circuitry 512 obtains and instantiates the ML algorithm 528 as a model 538 (FIG. 5), and uses it to select a subset of microservices to initiate to classify an input sample 506B (FIG. 5) as clean or malicious.

At block 908, the orchestrator service circuitry 508 (FIG. 5) obtains a sample submission. For example, a client device sends the orchestrator service circuitry 508 a sample input 506B for classifying as clean or malicious. In some examples, the orchestrator service circuitry 508 sends the sample input 506B to the inference circuitry 512. Additionally and/or alternatively, the inference circuitry 512 obtains the sample input 506B directly.

At block 910, the inference circuitry 512 generates an inference indicating a likelihood that one or more detection microservices will successfully classify the sample submission. For example, the inference circuitry 512 and/or the model 538 outputs which detection circuits of the threat detection system 504 should be selected to classify the sample input 506B based on the features 540 of the sample input 506B.

At block 912, the orchestrator service circuitry 508 initiates the one or more detection microservices based on the inference. For example, the orchestrator service circuitry 508 activates, triggers, etc., the first detection circuit 518, the second detection circuit 520, and the third detection circuit 522 based on the output of the model 538.

At block 914, the orchestrator service circuitry 508 executes a dynamic workflow of the selected detection microservices. For example, the orchestrator service circuitry 508 routes the metadata of the sample 506B to the first detection circuit 518 based on an inference that a first detection microservice, implemented by the first detection circuit 518, is most likely to successfully classify the sample 506B. If the classification circuitry 226 informs the orchestrator service circuitry 508 that the first detection circuit 518 did not successfully classify the sample 506B, the orchestrator service circuitry 508 routes the metadata of the sample 506B to the second detection circuit 520 based on an inference that a second detection microservice, implemented by the second detection circuit 520, is the next more likely than not to successfully classify the sample 506B. And this process continues until the orchestrator service circuitry 508 obtains a final classification of the sample 506B.

The operations 900 end when the orchestrator service circuitry 508 obtains a final classification of the input sample.

FIG. 10A is a block diagram of an example programmable circuitry platform 1000A structured to execute and/or instantiate the example machine-readable instructions and/or the example operations of FIGS. 6-8 to implement the orchestrator circuitry 202 of FIG. 2. FIG. 10B is a block diagram of an example programmable circuitry platform 1000B structured to execute and/or instantiate the example machine-readable instructions and/or the example operations of FIG. 9 to implement the orchestrator circuitry 502 of FIG. 5. The programmable circuitry platforms 1000A and 1000B can be, for example, a server, a personal computer, a workstation, a self-learning machine (e.g., a neural network), a mobile device (e.g., a cell phone, a smart phone, a tablet such as an iPad^{™}), or any other type of computing and/or electronic device.

The programmable circuitry platforms 1000A and 1000B of the illustrated example includes programmable circuitry 1012. The programmable circuitry 1012 of the illustrated example is hardware. For example, the programmable circuitry 1012 can be implemented by one or more integrated circuits, logic circuits, FPGAs, microprocessors, CPUs, GPUs, VPUs, DSPs, and/or microcontrollers from any desired family or manufacturer. The programmable circuitry 1012 may be implemented by one or more semiconductor based (e.g., silicon based) devices. In this example, the programmable circuitry 1012 of programmable circuitry platform 1000A implements the example orchestration circuitry 202, the example orchestrator service circuitry 208, the example frequency map circuitry 210, and the example classification collection circuitry 212. In this example, the programmable circuitry 1012 of programmable circuitry platform 1000B implements the example orchestration circuitry 502, the example orchestrator service circuitry 508, the example training circuitry 510, and the example inference circuitry 512.

The programmable circuitry 1012 of the illustrated example includes a local memory 1013 (e.g., a cache, registers, etc.). The programmable circuitry 1012 of the illustrated example is in communication with main memory 1014, 1016, which includes a volatile memory 1014 and a non-volatile memory 1016, by a bus 1018. The volatile memory 1014 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1016 may be implemented by flash memory and/or any other desired type of memory device. Access to the main memory 1014, 1016 of the illustrated example is controlled by a memory controller 1017. In some examples, the memory controller 1017 may be implemented by one or more integrated circuits, logic circuits, microcontrollers from any desired family or manufacturer, or any other type of circuitry to manage the flow of data going to and from the main memory 1014, 1016.

The programmable circuitry platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1022 are connected to the interface circuitry 1020. The input device(s) 1022 permit(s) a user (e.g., a human user, a machine user, etc.) to enter data and/or commands into the programmable circuitry 1012. The input device(s) 1022 can be implemented by, for example, an audio sensor, a microphone, a camera (still or video), a keyboard, and/or a button.

One or more output devices 1024 are also connected to the interface circuitry 1020 of the illustrated example. The output device(s) 1024 can be implemented, for example, by display devices (e.g., a light emitting diode (LED), an organic light emitting diode (OLED), a liquid crystal display (LCD), and/or a cathode ray tube (CRT) display. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1000 of the illustrated example also includes one or more mass storage discs or devices 1028 to store firmware, software, and/or data. Examples of such mass storage discs or devices 1028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs. In this example, the mass storage device 1028 of the programmable circuitry platform 1000A implements the example orchestration data source 214 of FIG. 2. In this example, the mass storage device 1028 of the programmable circuitry platform 1000B implements the example orchestration data source 514 of FIG. 5.

The machine readable instructions 1032, which may be implemented by the machine readable instructions of FIGS. 6-8 and/or FIG. 9, may be stored in the mass storage device 1028, in the volatile memory 1014, in the non-volatile memory 1016, and/or on at least one non-transitory computer readable storage medium such as a CD or DVD which may be removable. For example, the machine readable instructions of FIGS. 6-8 may be stored in the mass storage device 1028 of the programmable circuitry platform 1000A, while the machine readable instructions of FIG. 9 may be stored in the mass storage device 1028 of the programmable circuitry platform 1000B.

FIG. 11 is a block diagram of an example implementation of the programmable circuitry 1012 of FIG. 10 (FIGS. 10A and 10B). In this example, the programmable circuitry 1012 of FIG. 10 is implemented by a microprocessor 1100. For example, the microprocessor 1100 may be a general-purpose microprocessor (e.g., general-purpose microprocessor circuitry). The microprocessor 1100 executes some or all of the machine-readable instructions of the flowcharts of FIGS. 6 to effectively instantiate the circuitry of FIG. [ER-Diagram] as logic circuits to perform operations corresponding to those machine readable instructions. In some such examples, the circuitry of FIG. [ER-Diagram] is instantiated by the hardware circuits of the microprocessor 1100 in combination with the machine-readable instructions. For example, the microprocessor 1100 may be implemented by multi-core hardware circuitry such as a CPU, a DSP, a GPU, an XPU, etc. Although it may include any number of example cores 1102 (e.g., 1 core), the microprocessor 1100 of this example is a multi-core semiconductor device including N cores. The cores 1102 of the microprocessor 1100 may operate independently or may cooperate to execute machine readable instructions. For example, machine code corresponding to a firmware program, an embedded software program, or a software program may be executed by one of the cores 1102 or may be executed by multiple ones of the cores 1102 at the same or different times. In some examples, the machine code corresponding to the firmware program, the embedded software program, or the software program is split into threads and executed in parallel by two or more of the cores 1102. The software program may correspond to a portion or all of the machine readable instructions and/or operations represented by the flowcharts of FIGS. 6-9.

The cores 1102 may communicate by a first example bus 1104. In some examples, the first bus 1104 may be implemented by a communication bus to effectuate communication associated with one(s) of the cores 1102. For example, the first bus 1104 may be implemented by at least one of an Inter-Integrated Circuit (I2C) bus, a Serial Peripheral Interface (SPI) bus, a PCI bus, or a PCIe bus. Additionally or alternatively, the first bus 1104 may be implemented by any other type of computing or electrical bus. The cores 1102 may obtain data, instructions, and/or signals from one or more external devices by example interface circuitry 1106. The cores 1102 may output data, instructions, and/or signals to the one or more external devices by the interface circuitry 1106. Although the cores 1102 of this example include example local memory 1120 (e.g., Level 1 (L1) cache that may be split into an L1 data cache and an L1 instruction cache), the microprocessor 1100 also includes example shared memory 1110 that may be shared by the cores (e.g., Level 2 (L2 cache)) for high-speed access to data and/or instructions. Data and/or instructions may be transferred (e.g., shared) by writing to and/or reading from the shared memory 1110. The local memory 1120 of each of the cores 1102 and the shared memory 1110 may be part of a hierarchy of storage devices including multiple levels of cache memory and the main memory (e.g., the main memory 1014, 1016 of FIG. 10). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1102 may be referred to as a CPU, DSP, GPU, etc., or any other type of hardware circuitry. Each core 1102 includes control unit circuitry 1114, arithmetic and logic (AL) circuitry (sometimes referred to as an ALU) 1116, a plurality of registers 1118, the local memory 1120, and a second example bus 1122. Other structures may be present. For example, each core 1102 may include vector unit circuitry, single instruction multiple data (SIMD) unit circuitry, load/store unit (LSU) circuitry, branch/jump unit circuitry, floating-point unit (FPU) circuitry, etc. The control unit circuitry 1114 includes semiconductor-based circuits structured to control (e.g., coordinate) data movement within the corresponding core 1102. The AL circuitry 1116 includes semiconductor-based circuits structured to perform one or more mathematic and/or logic operations on the data within the corresponding core 1102. The AL circuitry 1116 of some examples performs integer based operations. In other examples, the AL circuitry 1116 also performs floating-point operations. In yet other examples, the AL circuitry 1116 may include first AL circuitry that performs integer-based operations and second AL circuitry that performs floating-point operations. In some examples, the AL circuitry 1116 may be referred to as an Arithmetic Logic Unit (ALU).

The registers 1118 are semiconductor-based structures to store data and/or instructions such as results of one or more of the operations performed by the AL circuitry 1116 of the corresponding core 1102. For example, the registers 1118 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1118 may be arranged in a bank as shown in FIG. 11. Alternatively, the registers 1118 may be organized in any other arrangement, format, or structure, such as by being distributed throughout the core 1102 to shorten access time. The second bus 1122 may be implemented by at least one of an I2C bus, a SPI bus, a PCI bus, or a PCIe bus.

Each core 1102 and/or, more generally, the microprocessor 1100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1100 is a semiconductor device fabricated to include many transistors interconnected to implement the structures described above in one or more integrated circuits (ICs) contained in one or more packages.

The microprocessor 1100 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1100, in the same chip package as the microprocessor 1100 and/or in one or more separate packages from the microprocessor 1100.

FIG. 12 is a block diagram of another example implementation of the programmable circuitry 1012 of FIG. 10 (FIGS. 10A and 10B). In this example, the programmable circuitry 1012 is implemented by FPGA circuitry 1200. For example, the FPGA circuitry 1200 may be implemented by an FPGA. The FPGA circuitry 1200 can be used, for example, to perform operations that could otherwise be performed by the example microprocessor 1100 of FIG. 11 executing corresponding machine readable instructions. However, once configured, the FPGA circuitry 1200 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1100 of FIG. 11 described above (which is a general purpose device that may be programmed to execute some or all of the machine readable instructions represented by the flowchart(s) of FIGS. 6-9 but whose interconnections and logic circuitry are fixed once fabricated), the FPGA circuitry 1200 of the example of FIG. 12 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 6-9. In particular, the FPGA circuitry 1200 may be thought of as an array of logic gates, interconnections, and switches. The switches can be programmed to change how the logic gates are interconnected by the interconnections, effectively forming one or more dedicated logic circuits (unless and until the FPGA circuitry 1200 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 6-9. As such, the FPGA circuitry 1200 may be configured and/or structured to effectively instantiate some or all of the operations/functions corresponding to the machine readable instructions of the flowchart(s) of FIGS. 6-9 as dedicated logic circuits to perform the operations/functions corresponding to those software instructions in a dedicated manner analogous to an ASIC. Therefore, the FPGA circuitry 1200 may perform the operations/functions corresponding to the some or all of the machine readable instructions of FIGS. 6-9 faster than the general-purpose microprocessor can execute the same.

In the example of FIG. 12, the FPGA circuitry 1200 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

The FPGA circuitry 1200 of FIG. 12, includes example input/output (I/O) circuitry 1202 to obtain and/or output data to/from example configuration circuitry 1204 and/or external hardware 1206. For example, the configuration circuitry 1204 may be implemented by interface circuitry that may obtain a binary file, which may be implemented by a bit stream, data, and/or machine-readable instructions, to configure the FPGA circuitry 1200, or portion(s) thereof. In some such examples, the configuration circuitry 1204 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1206 may be implemented by external hardware circuitry. For example, the external hardware 1206 may be implemented by the microprocessor 1100 of FIG. 11.

The FPGA circuitry 1200 also includes an array of example logic gate circuitry 1208, a plurality of example configurable interconnections 1210, and example storage circuitry 1212. The logic gate circuitry 1208 and the configurable interconnections 1210 are configurable to instantiate one or more operations/functions that may correspond to at least some of the machine readable instructions of FIGS. 6-9 and/or other desired operations. The logic gate circuitry 1208 shown in FIG. 12 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1208 to enable configuration of the electrical structures and/or the logic gates to form circuits to perform desired operations/functions. The logic gate circuitry 1208 may include other electrical structures such as look-up tables (LUTs), registers (e.g., flip-flops or latches), multiplexers, etc.

The configurable interconnections 1210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1208 to program desired logic circuits.

The storage circuitry 1212 of the illustrated example is structured to store result(s) of the one or more of the operations performed by corresponding logic gates. The storage circuitry 1212 may be implemented by registers or the like. In the illustrated example, the storage circuitry 1212 is distributed amongst the logic gate circuitry 1208 to facilitate access and increase execution speed.

The example FPGA circuitry 1200 of FIG. 12 also includes example dedicated operations circuitry 1214. In this example, the dedicated operations circuitry 1214 includes special purpose circuitry 1216 that may be invoked to implement commonly used functions to avoid the need to program those functions in the field. Examples of such special purpose circuitry 1216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1200 may also include example general purpose programmable circuitry 1218 such as an example CPU 1220 and/or an example DSP 1222. Other general purpose programmable circuitry 1218 may additionally or alternatively be present such as a GPU, an XPU, etc., that can be programmed to perform other operations.

Although FIGS. 11 and 12 illustrate two example implementations of the programmable circuitry 1012 of FIG. 10, many other approaches are contemplated. For example, FPGA circuitry may include an on-board CPU, such as one or more of the example CPU 1220 of FIG. 11. Therefore, the programmable circuitry 1012 of FIG. 10 may additionally be implemented by combining at least the example microprocessor 1100 of FIG. 11 and the example FPGA circuitry 1200 of FIG. 12. In some such hybrid examples, one or more cores 1102 of FIG. 11 may execute a first portion of the machine readable instructions represented by the flowchart(s) of FIGS. 6-9 to perform first operation(s)/function(s), the FPGA circuitry 1200 of FIG. 12 may be configured and/or structured to perform second operation(s)/function(s) corresponding to a second portion of the machine readable instructions represented by the flowcharts of FIG. 6-9, and/or an ASIC may be configured and/or structured to perform third operation(s)/function(s) corresponding to a third portion of the machine readable instructions represented by the flowcharts of FIGS. 6-9.

It should be understood that some or all of the circuitry of FIG. [ER-Diagram] may, thus, be instantiated at the same or different times. For example, same and/or different portion(s) of the microprocessor 1100 of FIG. 11 may be programmed to execute portion(s) of machine-readable instructions at the same and/or different times. In some examples, same and/or different portion(s) of the FPGA circuitry 1200 of FIG. 12 may be configured and/or structured to perform operations/functions corresponding to portion(s) of machine-readable instructions at the same and/or different times.

In some examples, some or all of the circuitry of FIG. [ER-Diagram] may be instantiated, for example, in one or more threads executing concurrently and/or in series. For example, the microprocessor 1100 of FIG. 11 may execute machine readable instructions in one or more threads executing concurrently and/or in series. In some examples, the FPGA circuitry 1200 of FIG. 12 may be configured and/or structured to carry out operations/functions concurrently and/or in series. Moreover, in some examples, some or all of the circuitry of FIG. [ER-Diagram] may be implemented within one or more virtual machines and/or containers executing on the microprocessor 1100 of FIG. 11.

In some examples, the programmable circuitry 1012 of FIG. 10 may be in one or more packages. For example, the microprocessor 1100 of FIG. 11 and/or the FPGA circuitry 1200 of FIG. 12 may be in one or more packages. In some examples, an XPU may be implemented by the programmable circuitry 1012 of FIG. 10, which may be in one or more packages. For example, the XPU may include a CPU (e.g., the microprocessor 1100 of FIG. 11, the CPU 1220 of FIG. 12, etc.) in one package, a DSP (e.g., the DSP 1222 of FIG. 12) in another package, a GPU in yet another package, and an FPGA (e.g., the FPGA circuitry 1200 of FIG. 12) in still yet another package.

A block diagram illustrating an example software distribution platform 1305 to distribute software such as the example machine readable instructions 1032 of FIG. 10 (FIGS. 10A and 10B) to other hardware devices (e.g., hardware devices owned and/or operated by third parties from the owner and/or operator of the software distribution platform) is illustrated in FIG. 13. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example machine readable instructions 1032 of FIG. 10. The third parties may be consumers, users, retailers, OEMs, etc., who purchase and/or license the software for use and/or re-sale and/or sub-licensing. In the illustrated example, the software distribution platform 1305 includes one or more servers and one or more storage devices. The storage devices store the machine readable instructions 1032, which may correspond to the example machine readable instructions of FIGS. 6-9, as described above. The one or more servers of the example software distribution platform 1305 are in communication with an example network 1310, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1032 from the software distribution platform 1305. For example, the software, which may correspond to the example machine readable instructions of FIG. 6-9, may be downloaded to the example programmable circuitry platform 1000, which is to execute the machine readable instructions 1032 to implement the orchestrator circuitry 202 of FIG. 2 and/or the orchestrator circuitry 502 of FIG. 5. In some examples, one or more servers of the software distribution platform 1305 periodically offer, transmit, and/or force updates to the software (e.g., the example machine readable instructions 1032 of FIG. 10) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that optimize the use of malware detection models in a threat detection system. Disclosed systems, apparatus, articles of manufacture, and methods improve the efficiency of using a computing device by reducing the computation required to scan and classify input samples as malicious or clean. For example, examples disclosed herein select a subset of malware detection models to activate, and only run more than one of the subset of detection models when a final classification of the input sample was not obtained by a previously ran detection mode. Accordingly, examples disclosed herein result in a reduction of time, energy, and resources (e.g., computational resources, memory resources, power resources, etc.) when monitoring for malware. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to optimize a malware detection system are disclosed herein. Further examples and combinations thereof include the following:
Example 1 includes an apparatus comprising interface circuitry to obtain an input sample, instructions, and at least one programmable circuit to be programmed by the instructions to select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models, and initiate the at least one selected detection model to classify the input sample as clean or malicious.
Example 2 includes the apparatus of example 1, wherein one or more of the at least one programmable circuit is to route the input sample to a first detection model of the at least one selected detection model, the first detection model corresponding to a greater number of successful classifications than remaining detection models in the at least one selected detection model, the first detection model to classify the input sample as clean or malicious.
Example 3 includes the apparatus of example 2, wherein the first detection model is to output a value corresponding to a confidence of the classification of the input sample, one or more of the at least one programmable circuit is to determine that the first detection model did not successfully classify the input sample based on the value, and route the input sample to a second detection model of the at least one selected detection model, the second detection model corresponding to a greater number of successful classifications than remaining detection models in the at least one selected detection model but having a number less than the number of successful classifications of the first detection model.
Example 4 includes the apparatus of example 1, wherein one or more of the at least one programmable circuit is to update the frequency map when classification events of new samples are streamed to the interface circuitry.
Example 5 includes the apparatus of example 1, wherein one or more of the at least one programmable circuit is to obtain classification events corresponding to input samples and the one or more detection models that successfully classified the input samples, determine an input sample type of the input sample has a frequent arrival pattern or a sparse arrival pattern based on the classification events, and initiate a sliding time window when the input sample type has the frequent arrival pattern and a session time window when the input sample type has the sparse arrival pattern, the sliding time window and the session time window to capture data from the classification events.
Example 6 includes the apparatus of example 1, wherein an input sample type of the input sample corresponds to a file-based sample, the one or more of the at least one programmable circuit is to populate the frequency map with a plurality of input sample types including file-based samples and fileless samples.
Example 7 includes the apparatus of example 1, wherein the input sample is a first input sample, the first input sample corresponds to a first input sample type, the at least one detection model is a first subset of the one or more detection models, and the one or more of the at least one programmable circuit is to select a second subset of the one or more detection models to classify a second input sample corresponding to a second input sample type different than the first input sample type, the second subset of the one or more detection models corresponding to a greater number of successful classifications of the second input sample type than the first subset of the one or more detection models.
Example 8 includes the apparatus of example 1, wherein the one or more detection models correspond to different detection mechanisms used to classify the input sample.
Example 9 includes the apparatus of example 1, wherein the one or more numbers corresponding to respective successful classifications are indicative of a number of times the one or more detection models generated output values having high confidence levels for input samples.
Example 10 includes a non-transitory machine readable storage medium comprising instructions to cause at least one programmable circuit to at least obtain an input sample, select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models , and initiate the at least one selected detection model to classify the input sample as clean or malicious.
Example 11 includes the non-transitory machine readable storage medium of example 10, wherein the instructions are to cause one or more of the at least one programmable circuit to route the input sample to a first detection model of the at least one selected detection model, the first detection model corresponding to a greater number of successful classifications than remaining detection models in the at least one selected detection model, the first detection model to classify the input sample as clean or malicious.
Example 12 includes the non-transitory machine readable storage medium of example 11, wherein the first detection model is to output a value corresponding to a confidence of the classification of the input sample, the instructions are to cause one or more of the at least one programmable circuit to determine that the first detection model did not successfully classify determine that the first detection model did not successfully classify the input sample based on the value, and route the input sample to a second detection model of the at least one selected detection model, the second detection model corresponding to a greater number of successful classifications than remaining detection models in the at least one selected detection model but having a number less than the number of successful classifications of the first detection model.
Example 13 includes the non-transitory machine readable storage medium of example 10, wherein the instructions are to cause one or more of the at least one programmable circuit to update the frequency map when classification events of new samples are streamed to the one or more of the at least one programmable circuit.
Example 14 includes the non-transitory machine readable storage medium of example 10, wherein the instructions are to cause one or more of the at least one programmable circuit to obtain classification events corresponding to input samples and the one or more detection models that successfully classified the input samples, determine an input sample type of the input sample has a frequent arrival pattern or a sparse arrival pattern based on the classification events, and initiate a sliding time window when the input sample type has the frequent arrival pattern and a session time window when the input sample type has the sparse arrival pattern, the sliding time window and the session time window to capture data from the classification events.
Example 15 includes the non-transitory machine readable storage medium of example 10, wherein an input sample type of the input sample corresponds to a file-based sample, the instructions are to cause one or more of the at least one programmable circuit to populate the frequency map with a plurality of input sample types including file-based samples and fileless samples.
Example 16 includes the non-transitory machine readable storage medium of example 10, wherein the input sample is a first input sample, the first input sample corresponds to a first input sample type, the at least one detection model is a first subset of the one or more detection models, the instructions are to cause one or more of the at least one programmable circuit to select a second subset of the one or more detection models to classify a second input sample corresponding to a second input sample type different than the first input sample type, the second subset of the one or more detection models corresponding to a greater number of successful classifications of the second input sample type than the first subset of the one or more detection models.
Example 17 includes a system comprising threat detection circuitry including one or more detection models to detect malicious data in an input sample, and orchestration circuitry to select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models, and initiate the at least one selected detection model to classify the input sample as clean or malicious.
Example 18 includes the system of example 17, wherein the orchestration circuitry is to route the input sample to a first detection model of the at least one selected detection model, the first detection model corresponding to a greater number of successful classifications than remaining detection models in the at least one selected detection model, the first detection model to classify the input sample as clean or malicious.
Example 19 includes the system of example 18, wherein the first detection model is to output a value corresponding to a confidence of the classification of the input sample, the orchestration circuitry is to determine that the first detection model did not successfully classify the input sample based on the value, and route the input sample to a second detection model of the at least one selected detection model, the second detection model corresponding to a greater number of successful classifications than remaining detection models in the at least one selected detection model but having a number less than the number of successful classifications of the first detection model.
Example 20 includes the system of example 17, wherein the orchestration circuitry is to update the frequency map when classification events of new samples are streamed to the orchestration circuitry.
Example 21 includes the system of example 17, wherein the orchestration circuitry is to obtain classification events corresponding to input samples and the one or more detection models that successfully classified the input samples, determine an input sample type of the input sample has a frequent arrival pattern or a sparse arrival pattern based on the classification events, and initiate a sliding time window when the input sample type has the frequent arrival pattern and a session time window when the input sample type has the sparse arrival pattern, the sliding time window and the session time window to capture data from the classification events.
Example 22 includes the system of example 17, wherein an input sample type of the input sample corresponds to a file-based sample, the orchestration circuitry is to populate the frequency map with a plurality of input sample types including file-based samples and fileless samples.
Example 23 includes the system of example 17, wherein the input sample is a first input sample, the first input sample corresponds to a first input sample type, the at least one detection model is a first subset of the one or more detection models, the orchestration circuitry is to select a second subset of the one or more detection models to classify a second input sample corresponding to a second input sample type different than the first input sample type, the second subset of the one or more detection models corresponding to a greater number of successful classifications of the second input sample type than the first subset of the one or more detection models.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry (1020) to obtain an input sample;
instructions; and
at least one programmable circuit to be programmed by the instructions to:
select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models; and
initiate the at least one selected detection model to classify the input sample as clean or malicious.

2. The apparatus of claim 1, wherein one or more of the at least one programmable circuit is to route the input sample to a first detection model of the at least one selected detection model, the first detection model corresponding to a greater number of successful classifications than remaining detection models in the at least one selected detection model, the first detection model to classify the input sample as clean or malicious.

3. The apparatus of claim 2, wherein the first detection model is to output a value corresponding to a confidence of the classification of the input sample, one or more of the at least one programmable circuit is to:
determine that the first detection model did not successfully classify the input sample based on the value; and
route the input sample to a second detection model of the at least one selected detection model, the second detection model corresponding to a greater number of successful classifications than remaining detection models in the at least one selected detection model but having a number less than the number of successful classifications of the first detection model.

4. The apparatus of any preceding claim, wherein one or more of the at least one programmable circuit is to update the frequency map when classification events of new samples are streamed to the interface circuitry (1020).

5. The apparatus of any preceding claim, wherein one or more of the at least one programmable circuit is to:
obtain classification events corresponding to input samples and the one or more detection models that successfully classified the input samples;
determine an input sample type of the input sample has a frequent arrival pattern or a sparse arrival pattern based on the classification events; and
initiate a sliding time window when the input sample type has the frequent arrival pattern and a session time window when the input sample type has the sparse arrival pattern, the sliding time window and the session time window to capture data from the classification events.

6. The apparatus of any preceding claim, wherein an input sample type of the input sample corresponds to a file-based sample, the one or more of the at least one programmable circuit is to populate the frequency map with a plurality of input sample types including file-based samples and fileless samples.

7. The apparatus of any preceding claim, wherein the input sample is a first input sample, the first input sample corresponds to a first input sample type, the at least one detection model is a first subset of the one or more detection models, and the one or more of the at least one programmable circuit is to select a second subset of the one or more detection models to classify a second input sample corresponding to a second input sample type different than the first input sample type, the second subset of the one or more detection models corresponding to a greater number of successful classifications of the second input sample type than the first subset of the one or more detection models.

8. The apparatus of any preceding claim, wherein the one or more detection models correspond to different detection mechanisms used to classify the input sample.

9. The apparatus of any preceding claim, wherein the one or more numbers corresponding to respective successful classifications are indicative of a number of times the one or more detection models generated output values having high confidence levels for input samples.

10. A machine readable storage medium comprising instructions to cause at least one programmable circuit to at least:
obtain an input sample;
select at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models ; and
initiate the at least one selected detection model to classify the input sample as clean or malicious.

11. The machine readable storage medium of claim 10, wherein the instructions are to cause one or more of the at least one programmable circuit to route the input sample to a first detection model of the at least one selected detection model, the first detection model corresponding to a greater number of successful classifications than remaining detection models in the at least one selected detection model, the first detection model to classify the input sample as clean or malicious.

12. The machine readable storage medium of claim 11, wherein the first detection model is to output a value corresponding to a confidence of the classification of the input sample, the instructions are to cause one or more of the at least one programmable circuit to:
determine that the first detection model did not successfully classify determine that the first detection model did not successfully classify the input sample based on the value; and
route the input sample to a second detection model of the at least one selected detection model, the second detection model corresponding to a greater number of successful classifications than remaining detection models in the at least one selected detection model but having a number less than the number of successful classifications of the first detection model.

13. The machine-readable storage medium of any preceding claim, wherein the instructions are to cause one or more of the at least one programmable circuit to update the frequency map when classification events of new samples are streamed to the one or more of the at least one programmable circuit.

14. The machine-readable storage medium of any preceding claim, wherein the instructions are to cause one or more of the at least one programmable circuit to:
obtain classification events corresponding to input samples and the one or more detection models that successfully classified the input samples;
determine an input sample type of the input sample has a frequent arrival pattern or a sparse arrival pattern based on the classification events; and
initiate a sliding time window when the input sample type has the frequent arrival pattern and a session time window when the input sample type has the sparse arrival pattern, the sliding time window and the session time window to capture data from the classification events.

15. A method comprising:
obtaining an input sample;
selecting at least one detection model from one or more detection models based on a frequency map, the frequency map including (a) identification of one or more detection models, and (b) one or more numbers corresponding to respective successful classifications of the one or more detection models, the at least one selected detection model corresponding to a higher number of successful classifications than remaining ones of the one or more detection models; and
initiating the at least one selected detection model to classify the input sample as clean or malicious.
